# EUROPEAN PATENT APPLICATION

(11) **EP 4 704 015 A1**
(43) Date of publication of application: **04.03.2026**
(21) Application number: 25198075.1
(22) Date of filing: 26.08.2025
(51) Int. Cl.: G06Q 30/0226, G06Q 20/32

(54) **SUGGESTION SYSTEM, SUGGESTION METHOD, AND PROGRAM**

(30) Priority: 26.08.2024 JP 2024144141
(71) Applicant: Rakuten Group, Inc., Setagaya-ku Tokyo 158-0094 (JP)
(72) Inventor: Hyodo, Naoki, Minato-ku, Tokyo, 108-0075 (JP)
(74) Representative: Hoffmann Eitle

(57) **Abstract**

A determination module (102, 201) of a suggestion system (1) determines whether a suggestion condition relating to a suggestion of a function screen for providing, out of a plurality of functions of a settlement app stored in a user terminal (20), a function to be suggested is satisfied. A suggestion module (103, 202) suggests the function screen in the settlement app when it is determined that the suggestion condition is satisfied.

## Description

### BACKGROUND OF THE INVENTION

### Field of the Invention

The present disclosure relates to a suggestion system, a suggestion method, and a program.

### Description of the Related Art

Hitherto, there has been known a settlement app in which a user can use a plurality of functions. For example, in JP2020-021218A, there is described a technology in which, based on a program (a type of settlement app) stored in an information processing device such as a smartphone, a screen for selecting settlement means usable at a shop located within a predetermined range from the current position of the information processing device is displayed on the information processing device, and a settlement is executed by reading the information processing device with a terminal at the shop.

### SUMMARY OF THE INVENTION

However, with the technology of JP2020-021218A, even when at least one of a plurality of types of settlement means available to the user is automatically selected, the functions of the settlement app are not suggested by the user, and therefore the user is unable to fully know the functions of the settlement app. Thus, with the technology of JP2020-021218A, convenience of the user is not sufficiently increased. This point is not limited to the technology of JP2020-021218A, and can be said to apply to related-art settlement apps in general.

One object of the present disclosure is to increase convenience of a user.

According to one embodiment of the present disclosure, there is provided a suggestion system including: a determination module configured to determine whether a suggestion condition relating to a suggestion of a function screen for providing, out of a plurality of functions of a settlement app stored in a user terminal, a function to be suggested is satisfied; and a suggestion module configured to suggest the function screen in the settlement app when it is determined that the suggestion condition is satisfied.

According to the present disclosure, it is possible to increase the convenience of the user.

### BRIEF DESCRIPTION OF THE DRAWINGS

FIG. 1 is a diagram for illustrating an example of a hardware configuration of a suggestion system.
FIG. 2 is a view for illustrating an example of screens displayed on a user terminal when the user terminal can connect to a network.
FIG. 3 is a view for illustrating an example of screens displayed on the user terminal when the user terminal cannot connect to a network.
FIG. 4 is a diagram for illustrating an example of functions implemented by the suggestion system.
FIG. 5 is a table for showing an example of a settlement database.
FIG. 6 is a table for showing an example of a loyalty points database.
FIG. 7 is a flowchart for illustrating an example of processing executed in the suggestion system.
FIG. 8 is a diagram for illustrating an example of functions implemented in modification examples of the present disclosure.
FIG. 9 is a view for illustrating an example of screens displayed on the user terminal in Modification Example 1.
FIG. 10 is a view for illustrating an example of a screen displayed on the user terminal in Modification Example 4.
FIG. 11 is a view for illustrating an example of a screen displayed on the user terminal in Modification Example 5.
FIG. 12 is a view for illustrating an example of a screen displayed on the user terminal in Modification Example 6.
FIG. 13 is a view for illustrating an example of screens displayed on the user terminal in Modification Example 7.
FIG. 14 is a view for illustrating an example of a screen displayed on the user terminal in Modification Example 9.
FIG. 15 is a view for illustrating an example of screens displayed on the user terminal in Modification Example 14.

### DESCRIPTION OF THE EMBODIMENTS

### [1. Hardware Configuration of Suggestion System]

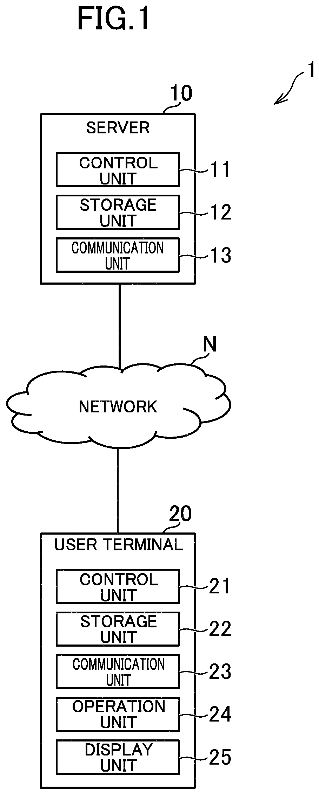

Description is now given of an example of an embodiment of a suggestion system, a suggestion method, and a program according to the present disclosure. FIG. 1 is a diagram for illustrating an example of a hardware configuration of the suggestion system. For example, a suggestion system 1 includes a settlement server 10 and a user terminal 20. Each of the settlement server 10 and the user terminal 20 is connected to a network N such as the Internet or a LAN. The number of at least one of the settlement servers 10 or the user terminals 20 may be two or more.

The settlement server 10 is a server computer of a settlement service. The settlement service is a service which provides an electronic settlement (cashless settlement) to users. For example, the settlement server 10 includes a control unit 11, a storage unit 12, and a communication unit 13. The control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication.

The user terminal 20 is a computer of a user. For example, the user terminal 20 is a smartphone, a tablet computer, a personal computer, or a wearable terminal. The user terminal 20 includes a control unit 21, a storage unit 22, a communication unit 23, an operation unit 24, and a display unit 25. Hardware configurations of the control unit 21, the storage unit 22, and the communication unit 23 may be the same as those of the control unit 11, the storage unit 12, and the communication unit 13, respectively. The operation unit 24 is an input device such as a touch panel or a mouse. The display unit 25 is a display such as a liquid crystal display or an organic EL display.

Programs stored in the storage units 12 and 22 may be supplied to the settlement server 10 or the user terminal 20 via the network N. Further, the settlement server 10 or the user terminal 20 may include at least one of a reading unit for reading a computer-readable information storage medium (for example, a memory card slot) or an input/output unit (for example, a USB port) through which data is input from or output to an external device. For example, the program stored on the information storage medium may be supplied to the settlement server 10 or the user terminal 20 via at least one of the reading unit or the input/output unit.

Moreover, it is only required for the suggestion system 1 to include at least one computer. The computers included in the suggestion system 1 are not limited to those of the example of FIG. 1. For example, the suggestion system 1 may include only the user terminal 20. In this case, the settlement server 10 exists outside the suggestion system 1. The suggestion system 1 may include only the settlement server 10. In this case, the user terminal 20 exists outside the suggestion system 1. The suggestion system 1 may include the settlement server 10 and another computer not shown in FIG. 1 (for example, a server computer of a loyalty points service described later).

### [2. Overview of Suggestion System]

In this embodiment, a case in which the user uses the settlement service from a settlement app stored in the user terminal 20 is taken as an example. The settlement app is an application provided by an administrator of the settlement service. The user can use any settlement means in the settlement service. For example, the user can use, for the settlement service, electronic money, a balance not called electronic money, a credit card, a card other than a credit card, loyalty points, a bank account, an account other than a bank account, a crypto-asset, a wallet, or other settlement means. The settlement means is used also in payment in some cases, and hence can also be considered as payment means.

For example, the user installs the settlement app on the user terminal 20 and registers as a member of the settlement service. When the user completes the membership registration for the settlement service, the user can start the settlement app on the user terminal 20 and use the settlement service. The user may use the settlement service from another app other than the settlement app stored on the user terminal 20 (for example, an app provided by a credit card company or another non-settlement related app) or from a browser.

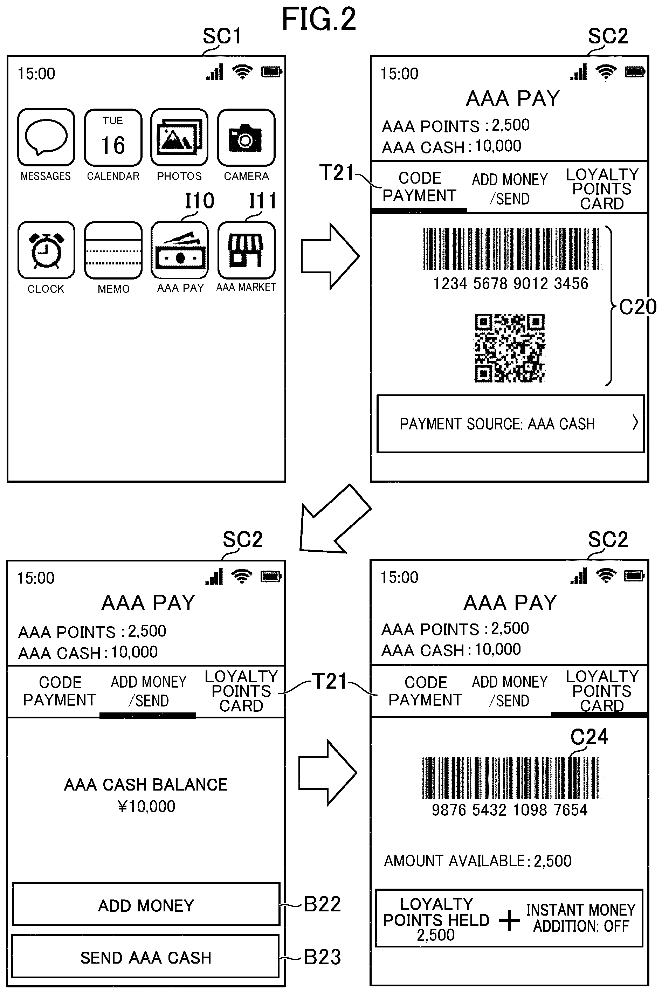

FIG. 2 is a view for illustrating an example of screens displayed on the user terminal 20 when the user terminal 20 can connect to the network N. For example, when the user performs an operation to start the user terminal 20 from the operation unit 24, the user terminal 20 displays a menu screen SC1 of the user terminal 20 on the display unit 25. The menu screen SC1 displays an icon I10 of the settlement app stored in the user terminal 20. The menu screen SC1 also displays icons of applications other than the settlement app. For example, the menu screen SC1 also displays an icon I11 of an electronic commerce app, which is an application of an electronic commerce service.

For example, when the user selects the icon I10 to start the settlement app, as illustrated on the upper right side of FIG. 2, the settlement app communicates to and from the settlement server 10 and displays a home screen SC2 of the settlement app on the display unit 25. The home screen SC2 is the screen which is displayed immediately after the settlement app is started. The home screen SC2 is sometimes called the first view. After the screen transitions to another screen of the settlement app, the user can perform an operation to return to the home screen SC2 to display the home screen SC2 on the display unit 25.

In the example of the upper right side of FIG. 2, the home screen SC2 includes a settlement code C20 generated based on a settlement code ID with which the user in the settlement service is identifiable. The settlement code C20 is a code for a settlement. In the example of the upper right side of FIG. 2, a case in which the settlement code C20 includes a barcode and a two-dimensional code is illustrated, but the settlement code C20 may be any one of a barcode and a two-dimensional code. The processing of generating the settlement code C20 from the settlement code ID may be executed by any one of the settlement server 10 and the user terminal 20. The user executes the settlement by causing a terminal of a shop affiliated with the settlement service to read the settlement code C20.

The settlement in the settlement service may be executed by another method other than the method of causing a shop terminal to read the settlement code C20. Examples of other types of settlement include reading a code displayed on the shop terminal by the user terminal 20, reading a code posted in the shop by the user terminal 20, completing a settlement by operating the user terminal 20 alone, using an IC chip in the user terminal 20, an online settlement in which a settlement is executed online (for example, an account settlement in which an account of the user is used, or an ID settlement in which an ID of the user is used), a carrier settlement in which a settlement is executed by the carrier used by the user terminal 20, or another type of settlement. For example, a settlement for paying an invoice may be executed by causing the user to read a code on the invoice with the user terminal 20.

In this embodiment, a case in which the settlement app has a plurality of functions relating to the settlement service is taken as an example. Each function is a program, or a part of the program, indicating information processing for providing the settlement service to the user. The settlement app is a collection of individual programs of a plurality of functions. The programs can also be considered as small programs which form the settlement app. Each function may be data which is referenced or updated by the program. For example, the settlement app has a settlement function, a remittance function, and a loyalty points function.

The settlement function is a function for executing a settlement based on settlement means of the user. In this embodiment, a case in which a settlement is executed based on the settlement means designated by the user is taken as an example. For example, the settlement function is a function for executing a settlement for payment of the price of a product or a service sold by a shop based on the settlement means designated by the user as a payment source. In the example of the upper right side of FIG. 2, electronic money "AAA Cash" is designated as the payment source, and hence the settlement function is a function for executing a settlement based on the electronic money "AAA Cash." The settlement function may be the same as the function of a publicly-known settlement service.

The remittance function is a function for sending all or a part of a balance of the settlement means between users. In this embodiment, the electronic money "AAA Cash" corresponds to the remittance function. For example, the remittance function is a function for sending the electronic money "AAA Cash" in a remittance amount designated by the user to another user designated by the user. The remittance function may be a function in which the user receives the electronic money "AAA Cash" in the remittance amount designated by another user. The remittance function may be the same as the function of a publicly-known settlement service.

The loyalty points function is a function for providing the loyalty points service to the user. The loyalty points service is a service for managing loyalty points held by the user. The loyalty points service works in conjunction with the settlement service. The loyalty points service may be one service of the settlement service. The loyalty points function is a function for providing the loyalty points service from the settlement app to the user. The user can use the loyalty points function to earn and spend loyalty points. The loyalty points function may be the same as the function of a publicly-known loyalty points service. The user can use loyalty points to execute a settlement, and hence the loyalty points function is also a type of settlement function.

In this embodiment, the user can switch functions on the home screen SC2 by selecting a tab T21. In the example of the upper right side of FIG. 2, the tab T21 "code payment" is selected, and hence the settlement function for executing the settlement with the settlement code C20 is selected. For example, when the user selects the tab T21 "add money/send," as illustrated on the lower left side of FIG. 2, the settlement app switches the display of the home screen SC2 so that the user can use the remittance function. The home screen SC2 of the remittance function includes a button B22 for adding money and a button B23 for executing a remittance to another user.

For example, when the user selects the tab T21 "loyalty points card," as illustrated on the lower right of FIG. 2, the settlement app switches the display of the home screen SC2 so that the user can use the loyalty points function. The settlement app communicates to and from the settlement server 10 or the server computer of the loyalty points service, and displays, on the home screen SC2, a loyalty points code C24 generated based on a loyalty points code ID with which the user in the loyalty points service is identifiable. The loyalty points code C24 can also be considered as an electronic loyalty points card. The user can earn loyalty points corresponding to the settlement amount by causing a terminal of the shop to read the loyalty points code C24.

In the example of the lower right side of FIG. 2, a case in which the loyalty points code C24 is a barcode is described, but the loyalty points code C24 may be a two-dimensional code, or may include a barcode and a two-dimensional code. The processing of generating the loyalty points code C24 from the loyalty points code ID may be executed by any one of the settlement server 10 and the user terminal 20. When there is a server computer of the loyalty points service in addition to the settlement server 10, the processing may be executed by the server computer of the loyalty points service. The processing of issuing the loyalty points code ID may also be executed by the server computer of the loyalty points service.

Further, in this embodiment, a case in which the settlement code ID and the loyalty points code ID are separate from each other is taken as an example, but the settlement code ID and the loyalty points code ID may be the same as each other. That is, the user may be identified by a code ID common to the settlement service and the loyalty points service. In other words, the settlement code C20 and the loyalty points code C24 are not required to be separate from each other, and may be the same. A common code may be used for each of the settlement service and the loyalty points service. In this case, the settlement function and the loyalty points function are provided on the home screen SC2 of the same tab T21.

In this embodiment, a screen of a specific function is suggested to the user in the settlement app in accordance with a communication status of the settlement app. For example, when the user terminal 20 is in airplane mode, the settlement app becomes offline and cannot connect to the network N. As a result, the user terminal 20 cannot communicate to and from other computers. In this case, the settlement app suggests to the user a screen of a function for offline use which is a function that can be used even offline. The settlement app has functions for online use, which are functions that can only be used online, and functions for offline use. The functions for offline use may be functions which are usable only offline, or may be functions which can be used both online and offline.

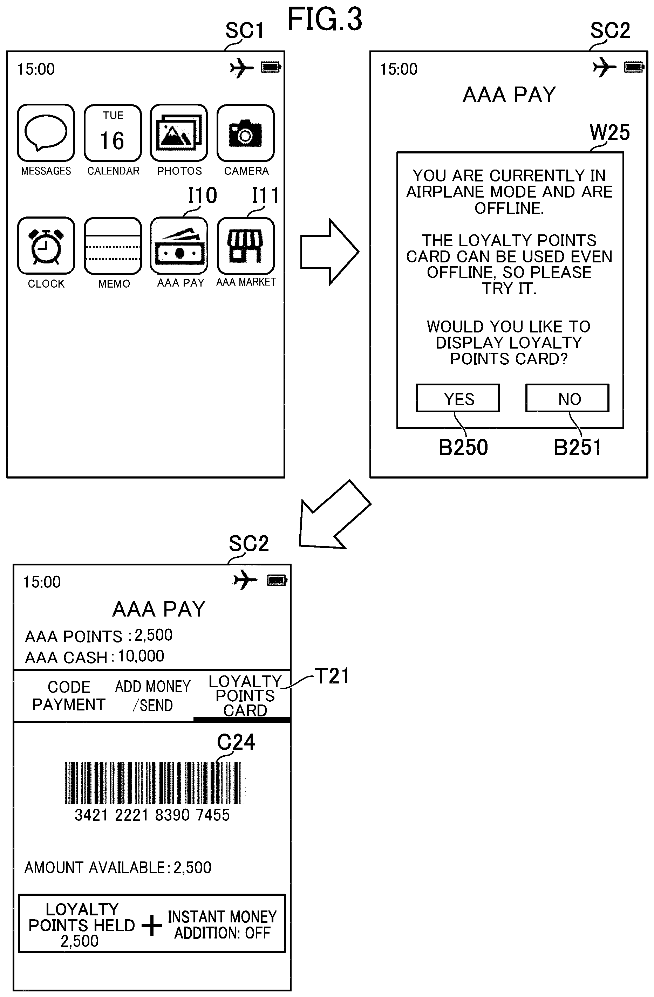

FIG. 3 is a view for illustrating an example of screens displayed on the user terminal 20 when the user terminal 20 cannot connect to the network N. For example, when the user terminal 20 enters airplane mode, as illustrated on the upper left side of FIG. 3, an icon indicating airplane mode is displayed on the upper right side of the menu screen SC1. In this state, when the user selects the icon I10, the settlement app is started. The settlement app cannot communicate to and from the settlement server 10 because the user terminal 20 is in airplane mode. In this case, as illustrated on the upper right side of FIG. 3, the settlement app displays a window W25 for suggesting the loyalty points function, which is an example of a function for offline use, on the home screen SC2.

In this embodiment, the settlement app stores the loyalty points code ID for offline use before the settlement app goes offline. Thus, the settlement app can display the loyalty points code C24 even offline. When the settlement app is offline, the user can use the loyalty points function based on the loyalty points code ID for offline use. In contrast, the settlement function and the remittance function are online functions. When the settlement app is offline, the user cannot use the settlement function and the remittance function.

For example, when the user selects a button B250 indicating that the loyalty points function suggested in the window W25 is to be used, as illustrated on the lower left side of FIG. 3, the settlement app displays the home screen SC2 of the loyalty points function on the display unit 25. For example, the settlement app displays the loyalty points code C24 generated based on the loyalty points code ID for offline use on the home screen SC2 of the loyalty points function. On the tab T21, "loyalty points card" becomes selected. When the user reads the loyalty points code C24 with a shop terminal, the user can execute payment by using loyalty points even when the settlement app is offline.

When the user selects a button B251 under the state illustrated on the upper right side of FIG. 3, the settlement app displays the home screen SC2 of the settlement function on the display unit 25. However, because the settlement app is offline, the settlement code C20 is not displayed on the home screen SC2 of the settlement function. Even when the user selects the tab T21 of the remittance function, a message indicating that the user cannot use the remittance function is displayed on the home screen SC2 of the remittance function.

As described above, the suggestion system 1 according to this embodiment displays, when the communication status of the settlement app is offline, the window W25 suggesting the home screen SC2 of the loyalty points function that is usable even offline on the display unit 25. Based on the window W25, the user can grasp that the loyalty points function is usable even offline. Through selecting the button B250, the user can display the home screen SC2 of the loyalty points function even without selecting the loyalty points function of the tab T21. As a result, the suggestion system 1 can increase the convenience of the user. Details of the suggestion system 1 are now described.

### [3. Functions Implemented in Suggestion System]

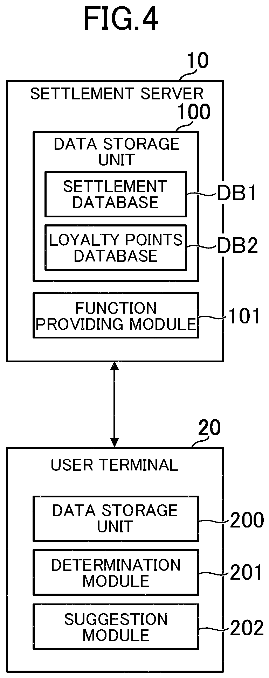

FIG. 4 is a diagram for illustrating an example of functions implemented in the suggestion system 1. Each component implemented by the suggestion system 1 according to this embodiment can be configured so that, for example, the components are unified into one device or more finely divided to be distributed to devices.

### [3-1. Functions Implemented in Settlement Server]

For example, the settlement server 10 includes a data storage unit 100 and a function providing module 101. The data storage unit 100 is implemented by the storage unit 12. The function providing module 101 is implemented by the control unit 11.

### [Data Storage Unit]

The data storage unit 100 stores various types of data to be used in the settlement service. For example, the data storage unit 100 stores a settlement database DB1 and a loyalty points database DB2.

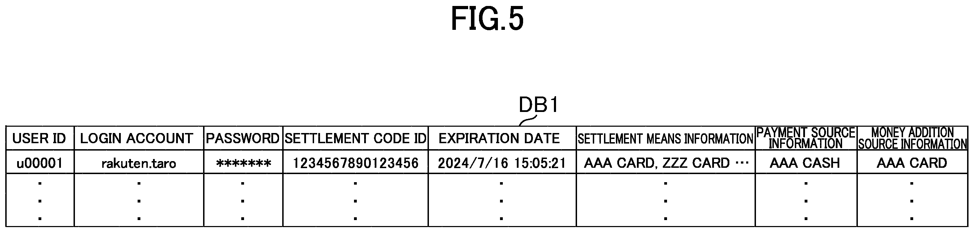

FIG. 5 is a table for showing an example of the settlement database DB1. The settlement database DB1 is a database in which various types of information for the settlement service are stored. For example, the settlement database DB1 stores a user ID, a login account, a password, a settlement code ID, an expiration date, settlement means information, payment source information, and money addition source information. The information stored in the settlement database DB1 is not limited to the example of FIG. 5. Other information may also be stored in the settlement database DB1. For example, the settlement database DB1 may store other information such as history information and operation information, which are described in modification examples later.

The user ID is an example of user identification information with which the user is identifiable. The login account is also an example of the user identification information. The login account is the user identification information input by the user to log in to the settlement service. The login account may be designed so that the user can freely change the login account. The user ID is user identification information managed independently of the login account. In this embodiment, a case in which the login account exists independently of the user ID (a case in which at least two pieces of user identification information exist) is taken as an example, but the number of pieces of the user identification information may be only one. That is, the user ID and the login account are not required to be separated from each other. The password is authentication information to be checked at the login.

The settlement code ID is also an ID with which the user is identifiable, and hence is an example of the user identification information. In this embodiment, a case in which the settlement server 10 issues the settlement code ID is taken as an example. For example, when issuing a settlement code ID for a certain user, the settlement server 10 issues a new settlement code ID so as not to overlap with other settlement code IDs. The settlement server 10 stores the new settlement code ID and the expiration date in the settlement database DB1 in association with the user ID and the login account of the user. The expiration date may be determined by any method. For example, the expiration date may be a predetermined time after the issuance of the settlement code ID.

The settlement code ID may be issued at any timing. For example, the settlement server 10 may issue a settlement code ID when the settlement app is started, when the expiration date has passed, when the user instructs the issuance of a settlement code ID, or at another timing. The settlement code ID may be issued by another computer (for example, a server computer which executes authentication at the time of settlement), in place of the settlement server 10. It is not required that an expiration date be set for the settlement code ID. For example, the settlement code ID may be a semi-permanently valid ID for which an expiration date is not particularly set.

The settlement means information is information with which the settlement means is identifiable. For example, the settlement means information is information on a credit card number and the like, information on an electronic money number, a balance, and the like, information on a bank account, a balance, and the like, or information on a loyalty points card number and the like. The payment source information is information with which the settlement means selected as the payment source is identifiable. The payment source is settlement means for paying for the price of the product or service handled by the shop. The money addition source information is information with which the settlement means selected as the money addition source is identifiable. The money addition source is settlement means that serves as the source of funds for adding money. Adding money can be performed for any settlement means, such as electronic money. For example, the user can instruct money to be added from the settlement app.

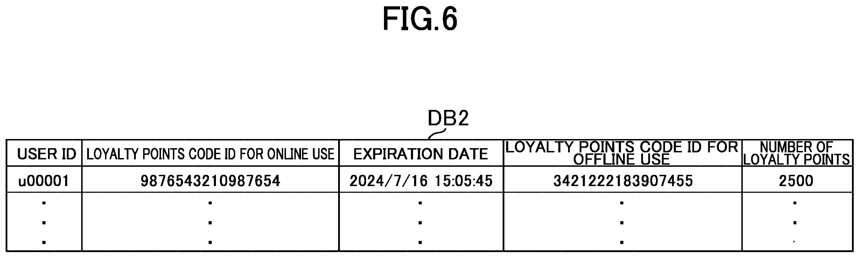

FIG. 6 is a table for showing an example of the loyalty points database DB2. The loyalty points database DB2 is a database in which various types of information relating to the loyalty points service are stored. For example, the loyalty points database DB2 stores a user ID, a loyalty points code ID for online use, an expiration date, a loyalty points code ID for offline use, and the number of loyalty points held by the user. The information stored in the loyalty points database DB2 is not limited to the example of FIG. 6. Other information may be stored in the loyalty points database DB2. For example, the loyalty points database DB2 may store a login account and a password for a user to log in to the loyalty points service.

In this embodiment, a case in which the user ID of the settlement service and the user ID of the loyalty points service are the same (case in which a common user ID is used for the settlement service and the loyalty points service) is taken as an example, but the user ID of the settlement service and the user ID of the loyalty points service may be different from each other. When the user ID of the settlement service and the user ID of the loyalty points service are different from each other, a database indicating the correspondence between the user ID of the settlement service and the user ID of the loyalty points service is stored in the data storage unit 100. The database may be stored in another computer other than the settlement server 10, or an information storage medium.

The loyalty points code ID is an ID with which the user is identifiable, and hence is an example of the user identification information. In this embodiment, a case in which the settlement server 10 issues the loyalty points code ID is taken as an example. For example, when issuing a loyalty points code ID for a certain user, the settlement server 10 issues a new loyalty points code ID so as not to overlap with other loyalty points code IDs. The settlement server 10 stores the new loyalty points code ID and the expiration date in the settlement database DB1 in association with the user ID of the user. The expiration date may be determined by any method. For example, the expiration date may be a predetermined time after the issuance of the loyalty points code ID.

The loyalty points code ID may be issued at any timing. For example, the settlement server 10 may issue a loyalty points code ID when the settlement app is started, when the expiration date has passed, when the user instructs the issuance of a loyalty points code ID, or at another timing. The loyalty points code ID may be issued by another computer (for example, a computer of the loyalty points service), in place of the settlement server 10. It is not required that an expiration date be set for the loyalty points code ID. For example, the loyalty points code ID may be a semi-permanently valid ID for which an expiration date is not particularly set.

In this embodiment, the loyalty points code ID for online use and the loyalty points code ID for offline use are stored in the loyalty points database DB2. When the communication status of the settlement app is online, a loyalty points code C24 generated based on the loyalty points code ID for online use is displayed on the home screen SC2, and hence the loyalty points code ID for online use stored in the loyalty points database DB2 is checked. When the communication status of the settlement app is offline, a loyalty points code C24 generated based on the loyalty points code ID for offline use is displayed on the home screen SC2, and hence the loyalty points code ID for offline use stored in the loyalty points database DB2 is checked.

The number of loyalty points can also be considered as the balance of the loyalty points held by the user. When loyalty points are awarded to a user, the number of loyalty points increases. When the user settles using loyalty points, the number of loyalty points decreases. The flow in which the user uses loyalty points may be the same as the flow in a publicly-known loyalty points service. When a physical loyalty points card is used in addition to the settlement app, a loyalty points card number with which the physical loyalty point card is identifiable may be stored in the loyalty points database DB2 in association with the number of loyalty points.

The data stored in the data storage unit 100 is not limited to the above-mentioned example. The data storage unit 100 may store various types of data for at least one of the settlement service or the loyalty points service. For example, the data storage unit 100 may store data required for displaying the home screen SC2 or another screen. The data storage unit 100 may store a program indicating processing on the settlement server 10 side for the user to use each of the plurality of functions of the settlement app. The data storage unit 100 may store data indicating a correspondence between a suggestion condition and a function screen, which are described later. This data may specify which function screen is to be suggested when a certain suggestion condition is satisfied.

### [Function Providing Module]

The function providing module 101 executes processing on the settlement server 10 side for providing the plurality of functions of the settlement app to the user. For example, in a case in which the user uses the settlement function, when the function providing module 101 receives a request from the settlement app to generate a settlement code ID, the function providing module 101 generates the settlement code ID, and transmits the generated settlement code ID to the settlement app. In a case in which a settlement is executed by reading the settlement code C20 with a shop terminal, the function providing module 101 communicates to and from the shop terminal and acquires the settlement code ID acquired from the settlement code C20. The function providing module 101 executes, based on the settlement database DB1, a settlement based on the payment source information associated with the settlement code ID. Also when another type of settlement is executed, the function providing module 101 may execute a settlement by communicating to and from a shop terminal, a settlement app, or another computer. In a case in which the user uses the remittance function, when the function providing module 101 receives a remittance or add-money request from the settlement app, the function providing module 101 executes remittance to another user designated by the user, or adds money based on an amount of money to be added designated by the user.

For example, in a case in which the user uses the loyalty points function, when the communication status of the settlement app is online, the function providing module 101 receives a request to generate a loyalty points code ID from the settlement app. The function providing module 101 generates the loyalty points code ID for online use, and transmits the generated loyalty points code ID to the settlement app. When the loyalty points code C24 for online use is read by the shop terminal, the function providing module 101 communicates to and from the shop terminal, and acquires the loyalty points code ID for online use acquired from the loyalty points code C24 for online use. The function providing module 101 executes, based on the loyalty points database DB2, processing of using loyalty points within the range of the number of loyalty points associated with the loyalty points code ID for online use, or executes processing of increasing the loyalty points associated with the loyalty points code ID for online use.

For example, the function providing module 101 transmits the loyalty points code ID for offline use to the settlement app at a given timing when communication to and from the settlement app is established. The settlement app stores the loyalty points code ID for offline use. In this embodiment, a case in which an expiration date is not set for the loyalty points code ID for offline use is taken as an example, but an expiration date may be set for the loyalty points code ID for offline use as well. The flow after the loyalty points code C24 is read by the shop terminal is the same as the flow after the loyalty points code C24 for online use is read. In cases in which the user uses another function as well, the function providing module 101 is only required to execute processing on the settlement server 10 side.

### [3-2. Functions Implemented in User Terminal]

For example, the user terminal 20 includes a data storage unit 200, a determination module 201, and a suggestion module 202. The data storage unit 200 is implemented by the storage unit 22. The determination module 201 and the suggestion module 202 are each implemented by the control unit 21.

### [Data Storage Unit]

The data storage unit 200 stores data required for the user to use at least one of the settlement service or the loyalty points service. For example, the data storage unit 200 stores the settlement app. When the user uses a settlement service from another app or a browser in place of the settlement app, the data storage unit 200 stores the another app or browser. The data storage unit 200 may store the settlement code ID, the loyalty points code ID for online use, the loyalty points code ID for offline use, and other information. The data storage unit 200 may store data indicating a correspondence between the suggestion condition and the function screen, which are described later. This data may specify which function screen is to be suggested when a certain suggestion condition is satisfied.

### [Determination Module]

The determination module 201 determines whether or not a suggestion condition relating to a suggestion of the function screen for providing a function to be suggested out of a plurality of functions of the settlement app stored in the user terminal 20 is satisfied. The function to be suggested is at least one of the plurality of functions. In this embodiment, a case in which the loyalty points function corresponds to the function to be suggested is taken as an example, but the function to be suggested may be another function. For example, the function to be suggested may be the settlement function, the remittance function, or another function.

The function screen is a screen for providing any one of the plurality of functions to the user. In other words, the function screen is a screen corresponding to a user interface of any one of the plurality of functions. In this embodiment, the loyalty points function is suggested, and hence the home screen SC2 of the loyalty points function (home screen SC2 in a state in which the tab T21 "loyalty points card" of the loyalty points function is selected) corresponds to the function screen. When the settlement function is suggested, the home screen SC2 of the settlement function (home screen SC2 in a state in which the tab T21 "code payment" of the settlement function is selected) corresponds to the function screen. When the remittance function is suggested, the home screen SC2 of the remittance function (home screen SC2 in a state in which the tab T21 "add money/send" of the remittance function is selected) corresponds to the function screen.

The function screen is not limited to the home screen SC2 of the settlement function, the home screen SC2 of the remittance function, and the home screen SC2 of the loyalty points function. When at least one of the settlement function, the remittance function, or the loyalty points function is provided on another screen other than the home screen SC2, the another screen may correspond to the function screen. For example, when the tab T21 is not switched, there may be a screen dedicated to the settlement function, a screen dedicated to the remittance function, and a screen dedicated to the loyalty points function. In this case, those dedicated screens correspond to the function screen.

Further, when another function other than the settlement function, the remittance function, and the loyalty points function is suggested, the screen of the another function corresponds to the function screen. In addition, a certain function may include a plurality of detailed functions. For example, one settlement function may have a credit card function and an electronic money function. In this case, the screen for credit card settlement or the screen for electronic money settlement corresponds to the function screen. In this embodiment, a case in which the addition of electronic money is performed within the remittance function has been taken as an example, but a money addition function may be a function separate from the remittance function. In this case, the screen for adding money corresponds to the function screen.

For example, when the settlement app has a coupon function for managing a coupon, the screen for managing the coupon corresponds to the function screen. When the settlement app has a setting function for receiving a setting by the user, the screen for receiving a designation of the setting by the user corresponds to the function screen. This screen may be a screen which receives a setting of a screen to be displayed immediately after the settlement app is started (in the examples of FIG. 2 and FIG. 3, the setting of the tab T21 selected by default). When the settlement app has an authentication function for authentication in the settlement service, the screen for executing authentication corresponds to the function screen. When the settlement app has another function, the screen for providing the another function to the user may correspond to the function screen.

The suggestion condition is a condition that serves as a criterion for determining whether or not to suggest the function screen to the user. The suggestion condition can also be considered to be a trigger for suggesting the function screen to the user. The suggestion condition may be any condition associated with the function to be suggested. In this embodiment, a case in which the communication status of the settlement app corresponds to the suggestion condition is taken as an example, but as in the modification examples described later, a condition determined based on another element, such as history information, may correspond to the suggestion condition. The determination module 201 can determine those various types of suggestion conditions. In this embodiment, the suggestion condition is determined on the settlement app side, and hence data indicating the suggestion condition is included in the settlement app. For example, the suggestion condition may be defined in a part of the program code in the settlement app, or may be defined in data referenced by the program code in the settlement app.

For example, the function screen may be a status function screen for providing, out of a plurality of functions, a function that is usable by the user when the settlement app is in a predetermined status. The status of the settlement app is a hardware status of the user terminal 20 in which the settlement app is stored, or a software status within the settlement app. The predetermined status is the status that is determined when the suggestion condition is satisfied. That is, the predetermined status is the status that serves as the condition (trigger) for suggesting the function to be suggested. The status function screen is the screen of the function to be provided on condition that the settlement app is in the predetermined status, or the screen of a function that can be provided even when the settlement app is in the predetermined status.

In this embodiment, a case in which the communication status of the settlement app corresponds to the status of the settlement app is taken as an example, but the status of the settlement app may be another status other than the communication status of the settlement app. For example, the status of the settlement app may be a CPU usage rate by the settlement app, a memory consumption by the settlement app, the CPU usage rate of the entire user terminal 20, the memory consumption of the entire user terminal 20, a position of the user terminal 20, a time slot when the settlement app is started, or another status.

For example, when the status function screen corresponds to the function screen, the determination module 201 determines whether or not the suggestion condition is satisfied by determining whether or not the settlement app is in the predetermined status. When the determination module 201 determines that the settlement app is not in the predetermined status, the determination module 201 does not determine that the suggestion condition is satisfied, and when the determination module 201 determines that the settlement app is in the predetermined status, the determination module 201 determines that the suggestion condition is satisfied. The determination module 201 determines whether or not the settlement app is in the predetermined status by acquiring current status information indicating the current status of the settlement app, and determining whether or not the current status information indicates the predetermined status.

The determination method in a case in which the status of the settlement app is the communication status is described later. For example, when the CPU usage rate or the memory consumption corresponds to the status of the settlement app, the determination module 201 may determine whether or not the settlement app is in the predetermined status by acquiring the CPU usage rate or the memory consumption by the settlement app based on a publicly-known method such as a benchmark test, and determining whether or not the CPU usage rate or the memory consumption is a predetermined status.

For example, when the position of the user terminal 20 corresponds to the status of the settlement app, the determination module 201 may determine whether or not the settlement app is in the predetermined status by acquiring position information by using a GPS receiver or the communication unit 23 of the user terminal 20, for example, and determining whether or not the position indicated by the position information is a predetermined position. When the time slot when the settlement app is started corresponds to the status of the settlement app, the determination module 201 may determine whether or not the settlement app is in the predetermined status by acquiring the current date and time when the settlement app is started, and determining whether or not the current date and time is in a predetermined time slot. Similarly, when the status of the settlement app is another status, the determination module 201 may determine whether or not the settlement app is in the predetermined status by using a determination method corresponding to the another status.

For example, the status function screen may be a communication status function screen for providing, out of a plurality of functions, a function that is usable by the user when the communication status of the settlement app is a predetermined communication status. The communication status is whether or not communication is possible or the quality of communication. For example, the communication status is whether or not communication is offline, a communication speed, a signal strength, an amount of communication, or another status. The predetermined communication status is the status with which the suggestion condition is determined to be satisfied. That is, the predetermined communication status is the communication status that triggers suggestion of the function to be suggested. The communication status function screen is a screen of a function that is provided on condition that the communication status of the settlement app is the predetermined communication status, or a screen of a function that can be provided even when the communication status of the settlement app is the predetermined communication status.

In this embodiment, a case in which the predetermined communication status is communication being offline is taken as an example, but the predetermined communication status may be the communication speed being less than a threshold value, the signal strength being less than a threshold value, the communication amount being equal to or more than a threshold value, communication not being possible due to an error on the settlement server 10 side, or another status. The determination module 201 determines whether or not the settlement app is in the predetermined status by determining whether or not the communication status of the settlement app is the predetermined communication status. For example, when the determination module 201 determines that the communication status of the settlement app is not the predetermined communication status, the determination module 201 determines that the settlement app is not in the predetermined status, and when the determination module 201 determines that the communication status of the settlement app is the predetermined communication status, the determination module 201 determines that the settlement app is in the predetermined status.

The determination method in a case in which the predetermined communication status is communication being offline is described later. For example, when the communication speed being less than a threshold value corresponds to the predetermined communication status, the determination module 201 may determine whether or not the communication status of the settlement app is the predetermined communication status by, based on a publicly-known method, acquiring the current communication speed and determining whether or not the current communication speed is less than the threshold value. When the signal strength being less than a threshold value corresponds to the predetermined communication status, the determination module 201 may determine whether or not the communication status of the settlement app is the predetermined communication status by, based on a publicly-known method, acquiring the current signal strength and determining whether or not the current signal strength is less than the threshold value. When the communication amount being equal to or more than a threshold value corresponds to the predetermined communication status, the determination module 201 may determine whether or not the communication status of the settlement app is the predetermined communication status by, based on a publicly-known method, acquiring the current communication amount and determining whether or not the current communication amount is equal to or more than the threshold value.

In this embodiment, a case in which the communication status function screen is an offline function screen for providing, out of a plurality of functions, a function that is usable by the user when the communication status of the settlement app is offline is taken as an example. As used herein, offline refers to a state in which the settlement app cannot communicate to and from another device. In other words, offline refers to a state in which the user terminal 20 cannot communicate to and from another device. For example, offline means that the user terminal 20 is in airplane mode, the user terminal 20 is out of the coverage area, the user terminal 20 is not connected to a communication device of wireless LAN access points and the like, the communication function of the communication unit 23 is stopped, a state in which the settlement app cannot communicate to and from the settlement server 10 (that is, the settlement app is not receiving any response from the settlement server 10) continues for a predetermined period of time or more, or another state.

For example, the determination module 201 determines whether or not the communication status of the settlement app is the predetermined status by determining whether or not the communication status of the settlement app is offline. When the determination module 201 determines that the communication status of the settlement app is not offline, the determination module 201 determines that the communication status of the settlement app is not the predetermined status, and when the determination module 201 determines that the communication status of the settlement app is offline, the determination module 201 determines that the communication status of the settlement app is the predetermined status. For example, the determination module 201 may determine whether or not the communication status of the settlement app is offline by determining whether or not the user terminal 20 is in airplane mode.

For example, the determination module 201 may determine whether or not the communication status of the settlement app is offline by determining whether or not the user terminal 20 is out of the coverage area. The determination module 201 may determine whether or not the communication status of the settlement app is offline by determining whether or not the user terminal 20 is connected to a communication device of wireless LAN access points and the like. The determination module 201 may determine whether or not the communication status of the settlement app is offline by determining whether or not the communication function of the communication unit 23 is stopped. The determination module 201 may determine whether or not the communication status of the settlement app is offline by determining whether or not a state in which the settlement app cannot communicate to and from the settlement server 10 has continued for a predetermined time or longer.

### [Suggestion Module]

When it is determined that the suggestion condition is satisfied, the suggestion module 202 suggests the function screen in the settlement app. That is, the suggestion module 202 suggests the function screen in the settlement app on condition (trigger) that the suggestion condition is satisfied. When it is determined that the suggestion condition is not satisfied, the suggestion module 202 does not suggest the function screen in the settlement app. When there are a plurality of suggestion conditions, the suggestion module 202 suggests the function screen of a function associated with a suggestion condition determined by the determination module 201 to be satisfied out of the plurality of suggestion conditions.

"Suggests the function screen" means displaying information suggesting the function screen in the settlement app. In this embodiment, it is assumed that data required for displaying the information is stored in the data storage unit 200. For example, displaying a user interface part (for example, a window, a pop-up, a banner, a modal, a button, a panel, or another part) for displaying the function screen, displaying a screen for transitioning to the function screen, automatically transitioning to the function screen, or notifying by using a notification function of the settlement app correspond to "suggests the function screen." In the example of the upper right side of FIG. 3, displaying the window W25 corresponds to "suggests the function screen."

For example, the tab T21 (default tab T21) selected when the settlement app is started may be set by the user. In this case, the suggestion module 202 may suggest a specific function to the user by recommending the tab T21 of the specific function on a screen for the user to designate a setting. The suggestion by the suggestion module 202 may be performed at any timing. For example, the suggestion module 202 may perform the suggestion when the settlement app is started or at any timing while the settlement app is started.

For example, when the settlement app is determined to be in the predetermined status, the suggestion module 202 may suggest the status function screen in the settlement app**.** The suggestion module 202 suggests the function screen in the settlement app on condition (trigger) that the settlement app is in the predetermined status. The suggestion module 202 does not suggest the function screen in the settlement app when it is determined that the settlement app is not in the predetermined status.

For example, the suggestion module 202 may suggest the communication status function screen in the settlement app when it is determined that the communication status of the settlement app is the predetermined communication status. The suggestion module 202 suggests the function screen in the settlement app on condition (trigger) that the communication status of the settlement app is the predetermined communication status. The suggestion module 202 does not suggest the function screen in the settlement app when it is determined that the communication status of the settlement app is not the predetermined communication status.

For example, the suggestion module 202 suggests the offline function screen in the settlement app when it is determined that the communication status of the settlement app is offline. The suggestion module 202 suggests the function screen in the settlement app on condition (trigger) that the communication status of the settlement app is offline. The suggestion module 202 does not suggest the function screen in the settlement app when it is determined that the communication status of the settlement app is not offline. In this embodiment, the user can use the loyalty points function even when the communication status of the settlement app is offline, and hence the suggestion module 202 suggests the home screen SC2 of the loyalty points function as the offline function screen.

The offline function screen may be a screen of another function other than the loyalty points function. For example, when the user can use the electronic money settlement function even when the communication status of the settlement app is offline, the suggestion module 202 may suggest the screen of the electronic money settlement function as the offline function screen. For example, when the user can use a plurality of functions even when the communication status of the settlement app is offline, the suggestion module 202 may suggest a screen which displays only those plurality of functions as the offline function screen. When a certain function is usable both online and offline, the function screen of the function displayed online may be different from the offline function screen of the function displayed offline. For example, when the loyalty points function is usable offline as well, the offline function screen of the loyalty points function may have a smaller amount of information than that of the function screen of the loyalty points function online (for example, only the loyalty points code C24 is displayed, or only information that is actually usable offline is displayed) .

### [4. Processing Executed in Suggestion System]

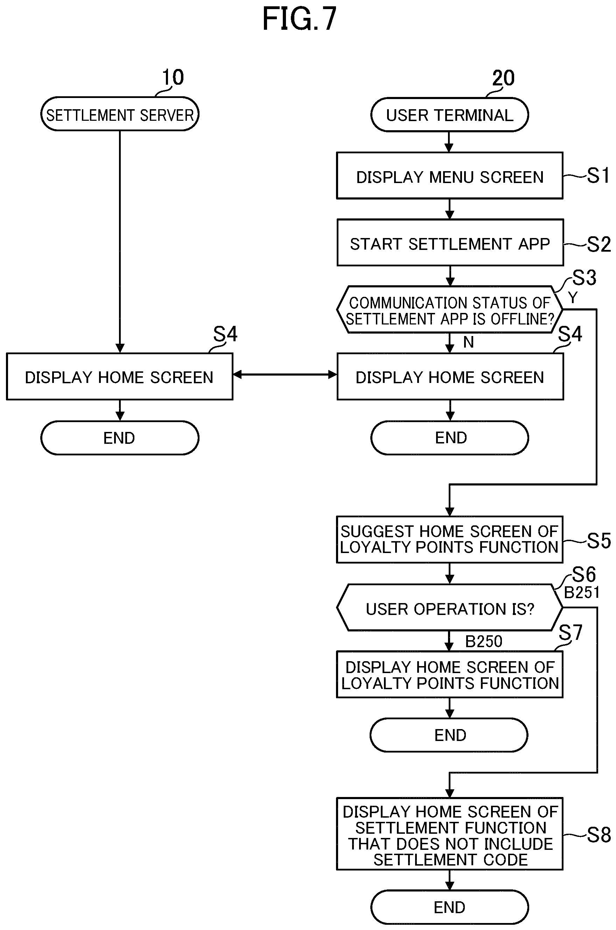

FIG. 7 is a flowchart for illustrating an example of processing executed in the suggestion system 1. In FIG. 7, out of the processing steps executed in the suggestion system 1, processing steps for performing a suggestion corresponding to the determination result of the suggestion condition are mainly illustrated. The processing of FIG. 7 is executed by the control units 11 and 21 executing the programs stored in the storage units 12 and 22, respectively. Steps of FIG. 7 are an example of a suggestion method.

As illustrated in FIG. 7, when the user performs an operation to start the user terminal 20 from the operation unit 24, the user terminal 20 displays the menu screen SC1 of the user terminal 20 on the display unit 25 (Step S1). When the user selects the icon I10, the user terminal 20 starts the settlement app (Step S2). The user terminal 20 determines whether or not the suggestion condition is satisfied by determining whether or not the communication status of the settlement app is offline (Step S3). In Step S3, the user terminal 20 determines whether or not the suggestion condition is satisfied by, for example, determining whether or not the current mode is airplane mode.

In Step S3, when it is not determined that the communication status of the settlement app is offline ("N" in Step S3), the user terminal 20 communicates to and from the settlement server 10 and executes processing to display the home screen SC2 (Step S4), and this processing is finished. In Step S4, a home screen SC2 like that on the upper right side of FIG. 2 is displayed on the user terminal 20. In Step S3, when it is determined that the communication status of the settlement app is offline ("Y" in Step S3), the user terminal 20 suggests the home screen SC2 of the loyalty points function by displaying the window W25 on the home screen SC2 without communicating to and from the settlement server 10 (Step S5).

The user terminal 20 identifies an operation by the user based on a signal from the operation unit 24 (Step S6). In Step S6, when the user selects the button B250 ("B250" in Step S6), the user terminal 20 displays the home screen SC2 of the loyalty points function on the display unit 25 based on the loyalty points code ID for offline use (Step S7), and this processing is finished. In Step S6, when the user selects the button B251 ("B251" in Step S6), the user terminal 20 displays, on the display unit 25, a home screen SC2 of the settlement function that does not include the settlement code C20 (Step S8), and this processing is finished.

### [5. Summary of Embodiment]

The suggestion system 1 according to this embodiment determines whether or not the suggestion condition is satisfied. When the suggestion system 1 determines that the suggestion condition is satisfied, the suggestion system 1 suggests the function screen in the settlement app. As a result, when the suggestion condition is satisfied, the user can know the existence of the function to be suggested, and hence the suggestion system 1 can increase the convenience of the user. For example, when the user does not know that the loyalty points function can be used even when the communication status of the settlement app is offline, based on the display of the window W25, the user can know that the loyalty points function can be used. The user can also display the home screen SC2 of the loyalty points function from the window W25, and hence the suggestion system 1 can increase the convenience of the user.

Further, the suggestion system 1 determines whether or not the suggestion condition is satisfied by determining whether or not the settlement app is in the predetermined status. When the suggestion system 1 determines that the settlement app is in the predetermined status, the suggestion system 1 suggests the status function screen in the settlement app. As a result, the user can know the existence of a function that is usable when the settlement app is in the predetermined status, and hence the suggestion system 1 can increase the convenience of the user.

Further, the suggestion system 1 determines whether or not the settlement app is in the predetermined status by determining whether or not the communication status of the settlement app is the predetermined communication status. When the suggestion system 1 determines that the communication status of the settlement app is the predetermined communication status, the suggestion system 1 suggests the communication status function screen in the settlement app. As a result, the user can know the existence of a function that is usable when the communication status of the settlement app is the predetermined communication status, and hence the suggestion system 1 can increase the convenience of the user.

Further, the suggestion system 1 determines whether or not the communication status of the settlement app is the predetermined status by determining whether or not the communication status of the settlement app is offline. When the suggestion system 1 determines that the communication status of the settlement app is offline, the suggestion system 1 suggests the offline function screen in the settlement app. As a result, the user can know the existence of a function that is usable when the communication status of the settlement app is offline, and hence the suggestion system 1 can increase the convenience of the user.

### [6. Modification Examples]

The present disclosure is not limited to the embodiment described above. The present disclosure can be modified suitably without departing from the spirit of the present disclosure.

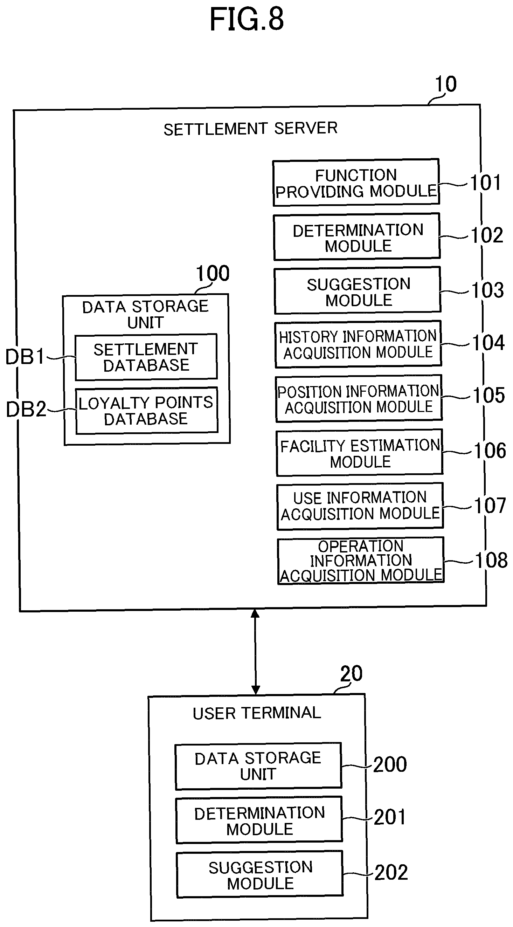

FIG. 8 is a diagram for illustrating an example of functions implemented in the modification examples. For example, the settlement server 10 includes a determination module 102, a suggestion module 103, a history information acquisition module 104, a position information acquisition module 105, a facility estimation module 106, a use information acquisition module 107, and an operation information acquisition module 108. Each of the determination module 102, the suggestion module 103, the history information acquisition module 104, the position information acquisition module 105, the facility estimation module 106, the use information acquisition module 107, and the operation information acquisition module 108 is implemented by the control unit 11.

In the embodiment, a case in which the processing of determining the suggestion condition and the processing of suggesting the function screen are each executed by the user terminal 20 has been taken as an example. In the modification examples described later, a case in which the processing of determining the suggestion condition and the processing of suggesting the function screen are executed by the settlement server 10 is taken as an example, but also in the modification examples described later, the processing of determining the suggestion condition and the processing of suggesting the function screen may be executed by the user terminal 20. The processing of determining the suggestion condition and the processing of suggesting the function screen may be implemented by the settlement server 10 and the user terminal 20 in a distributed manner.

### [6-1. Modification Example 1]

For example, in the embodiment, a case in which the status of the settlement app is the communication status has been taken as an example, but the status of the settlement app is not limited to the communication status. In Modification Example 1, a case in which the status of the settlement app is a start status of the settlement app is taken as an example. In the embodiment, a case in which the settlement app is started by the user selecting the icon I10 has been taken as an example, but the settlement app may be started by using another app.

The factor for starting the settlement app is hereinafter referred to as "start source." For example, the start source is another app other than the settlement app, a website, a link in a message such as an electronic mail or a short message service (SMS), or a notification in the user terminal 20. In Modification Example 1, a case in which an electronic commerce app corresponds to the start source is taken as an example, but the start source may be any source and is not limited to an electronic commerce app. For example, the start source may be another settlement app, a loyalty points service app, a travel reservation service app, a financial service app, a communication service app, a website of those services, a link in a message sent from those services, or a notification from those services.

The start source is installed in the user terminal 20. The start source is an app that links with the settlement app. The method of starting the settlement app from a start source may be a publicly-known method. For example, the settlement app may be started from a start source by a method called "deep linking." A plurality of start sources may be installed in the user terminal 20. The company which provides the start source and the company which provides the settlement app may be the same as or different from each other.

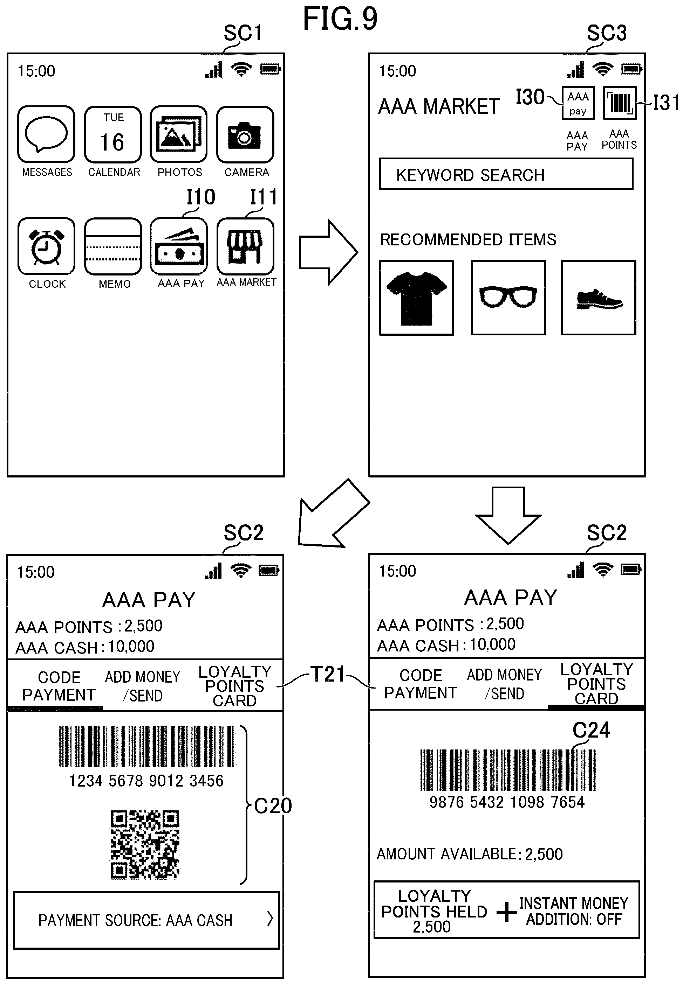

FIG. 9 is a view for illustrating an example of screens displayed on the user terminal 20 in Modification Example 1. For example, when the user selects the icon I11 under the state illustrated on the upper left side of FIG. 9, the user terminal 20 starts the start source and displays a start source screen SC3 on the display unit 25, as illustrated on the upper right side of FIG. 9. On the start source screen SC3, an icon I30 for the user to select the settlement function and an icon I31 for the user to select the loyalty points function are displayed. The icons I30 and I31 contain information (for example, a link) for starting the settlement app.

For example, when the user selects the icon I30, the settlement app is started, and as illustrated on the lower left side of FIG. 9, the settlement app displays the home screen SC2 of the settlement function on the display unit 25. When the user selects the icon I31, the settlement app is started, and as illustrated on the lower right side of FIG. 9, the settlement app displays the home screen SC2 of the loyalty points function on the display unit 25. In the example of the lower right side of FIG. 9, displaying the home screen SC2 of the loyalty points function corresponds to suggesting the function screen. In Modification Example 1, the function screen is suggested based on whether or not the settlement app has been started by the start source.

In the example of FIG. 9, when the user selects the icon I30, the home screen SC2 of the settlement function is displayed, but the icon I30 is not required to be displayed on the start source screen SC3. For example, in a case in which the user is logged in to the settlement service, when the user selects the icon I31, the home screen SC2 of the loyalty points function may be displayed. In a case in which the user is not logged in to the settlement service or is not registered as a member, the home screen SC2 of the settlement function may be displayed after logging in or registering as a member. When the settlement app is not installed in the user terminal 20 or the version of the settlement app is old, a website for downloading or updating the settlement app may be displayed on the user terminal 20.

In Modification Example 1, the status function screen described in the embodiment is a start source function screen for providing a function that is usable by the user when the settlement app is started by a predetermined start source. The start source function screen is the screen of a function that is provided on condition that the settlement app has been started by a start source, or the screen of a function that can be provided even when the settlement app has been started by a start source. In the example of the lower left side of FIG. 9, the home screen SC2 of the settlement function corresponds to the status function screen. In the example of the lower right side of FIG. 9, the home screen SC2 of the loyalty points function corresponds to the status function screen. The status function screen may be the screen of another function other than the settlement function and the loyalty points function.

The settlement server 10 in Modification Example 1 includes the determination module 102 and the suggestion module 103. The determination module 102 determines whether or not the settlement app is in the predetermined status by determining whether or not the settlement app has been started by the start source. When the determination module 102 determines that the settlement app has not been started by a start source, the determination module 102 does not determine that the settlement app is in the predetermined status, and when the determination module 102 determines that the settlement app has been started by the start source, the determination module 102 determines that the settlement app is in the predetermined status.

For example, when the user performs an operation to start the settlement app from a start source (in the example of FIG. 9, selects the icon I30 or I31), the user terminal 20 transmits a start notification indicating that the operation has been performed to the settlement server 10. The start notification may include information with which the start source is identifiable. The start notification may include information indicating what operation the user has performed (for example, information indicating the function selected by the user).

For example, the determination module 102 may determine whether or not the settlement app is in the predetermined status by determining whether or not the start notification has been received from the user terminal 20. The start notification may be transmitted after the settlement app starts, or may be transmitted before the settlement app starts. The start notification is transmitted from the user terminal 20 to the settlement server 10 on condition that an operation to start the settlement app has been performed from a start source.

The suggestion module 103 suggests a start source function screen in the settlement app when it is determined that the settlement app has been started by a start source. In Modification Example 1, the suggestion module 103 is implemented by the settlement server 10, and hence the suggestion module 103 suggests a start source function screen by transmitting data for suggesting the start source function screen to the user terminal 20. The user terminal 20 executes, based on the transmitted data, processing for suggesting the start source function screen. In Modification Example 1, the data storage unit 100 stores start source data indicating a relationship between the start source and the start source function screen. When the determination module 102 determines that the settlement app has been started by a start source, the suggestion module 103 identifies which start source function screen is to be suggested based on the start source data, and suggests the identified start source function screen.

The start source data can also be considered as data indicating a relationship between a suggestion condition and the start source function screen to be suggested when the suggestion condition is satisfied. In the example of FIG. 9, the start source data indicates the relationship between the operation that has caused the start source to start the settlement app (for example, selection of the icon I30 or I31) and the start source function screen. The start source data indicates that when the settlement app is started by selecting the icon I30, the home screen SC2 of the settlement function is to be suggested. The start source data indicates that when the settlement app is started by selecting the icon I31, the home screen SC2 of the loyalty points function is to be suggested.

In the example of FIG. 9, the suggestion module 103 suggests the home screen SC2 of the settlement function or the home screen SC2 of the loyalty points function as the start source function screen by transmitting the display data for displaying the home screen SC2 of the settlement function or the home screen SC2 of the loyalty points function to the user terminal 20. The display data may be data on the entire screen or data on a part of the screen. For example, the display data may be data in a markup language such as HTML, image data, text data, or other data.

For example, when the user starts the settlement app from a start source by selecting the icon I30, the suggestion module 103 suggests the home screen SC2 of the settlement function as the start source function screen by transmitting display data for displaying the home screen SC2 of the settlement function as illustrated on the lower left side of FIG. 9 to the user terminal 20. When the user starts the settlement app from a start source by selecting the icon I31, the suggestion module 103 suggests the home screen SC2 of the loyalty points function as the start source function screen by transmitting display data for displaying the home screen SC2 of the loyalty points function as illustrated on the lower right side of FIG. 9 to the user terminal 20. The user terminal 20 displays the home screen SC2 of the settlement function or the home screen SC2 of the loyalty points function based on the display data received from the settlement server 10.

In Modification Example 1 as well, the processing of determining the suggestion condition and the processing of suggesting the start source function screen may be executed by the determination module 201 and the suggestion module 202 of the user terminal 20. In this case, the determination module 201 may determine whether or not the settlement app has been started by the start source by determining whether or not the user has performed an operation to start the settlement app from the start source (in the example of FIG. 9, selected the icon I30 or I31). When it is determined that the settlement app has been started by the start source, the suggestion module 202 may communicate to and from the settlement server 10, and display the home screen SC2 of the settlement function or the home screen SC2 of the loyalty points function.

The suggestion system 1 according to Modification Example 1 determines whether or not the settlement app is in the predetermined status by determining whether or not the settlement app has been started by the start source. When the suggestion system 1 determines that the settlement app has been started by a start source, the suggestion system 1 suggests the start source function screen in the settlement app. As a result, the user can know the existence of a function that is usable when the settlement app has been started by a start source, and hence the suggestion system 1 can increase the convenience of the user. In the example of FIG. 9, the user can display the home screen SC2 of the function corresponding to the operation performed on the start source screen SC3, and hence the suggestion system 1 can increase the convenience of the user.

### [6-2. Modification Example 2]

For example, the method of determining whether or not a suggestion condition is satisfied is not limited to the examples described in the embodiment and Modification Example 1. The function to be suggested to the user may change depending on a history of the settlements executed by the user. In Modification Example 2, a case in which whether or not the suggestion condition is satisfied is determined based on the history of the settlements is taken as an example. The function screen in Modification Example 2 is a settlement-related function screen for providing, out of a plurality of functions, a settlement-related function relating to settlements executed from the settlement app.

The settlement-related function may be any function relating to settlements in some way. The settlement-related function is not limited to a settlement function for paying for the price of a product or a service purchased at a shop. For example, when a settlement is executed, the user can earn loyalty points corresponding to the settlement amount, and hence the loyalty points function is an example of the settlement-related function. A change in a balance due to a remittance being performed is a type of settlement, and hence the remittance function also corresponds to the settlement-related function. When money is added, a settlement using the settlement means of the charging source is executed, and hence the money addition function is also an example of the settlement-related function. For example, the home screen SC2 of the settlement function, the home screen SC2 of the remittance function, and the home screen SC2 of the loyalty points function each correspond to the settlement-related function screen. The settlement-related function may be specific settlement means used in a settlement, such as a credit card, electronic money, or a bank account. In other words, the settlement function of the credit card, the settlement function of the electronic money, and the settlement function of the bank account may be separate settlement-related functions.

The suggestion system 1 according to Modification Example 2 includes the history information acquisition module 104. The history information acquisition module 104 acquires history information relating to a history of the settlements executed by the settlement-related function. The history information is information indicating a use history of the settlement-related function. For example, the history information may indicate a settlement date and time, a settlement amount, the number of settlements, a settlement location, the number of loyalty points awarded by the settlement, a balance of electronic money, for example, after settlement, information on the settlement means set for the payment source, details of the purchased product or service, or a combination thereof. The settlement means is used not only for settlements but also for adding money, and hence the history information may indicate an amount of money added, a date and time when money is added, information on the settlement means set for the money addition source, or a combination thereof.

In Modification Example 2, it is assumed that history information on each of a plurality of users is stored in the settlement database DB1. Thus, the history information acquisition module 104 acquires the history information on users for which a suggestion condition is to be determined from the settlement database DB1. Each time a certain user uses a settlement-related function, the settlement server 10 updates the history information on this user. The history information may be stored in another database other than the settlement database DB1. For example, when the settlement-related function is the loyalty points function, the history information may be stored in the loyalty points database DB2. The history information acquisition module 104 may acquire the history information from another database. When the history information is stored in another computer other than the settlement server 10 or an information storage medium, the history information acquisition module 104 may acquire the history information from the another computer or information storage medium.

The data storage unit 100 in Modification Example 2 stores history suggestion data indicating a relationship between the suggestion condition determined based on the history information and the settlement-related function screen to be suggested when the suggestion condition is satisfied. The history suggestion data may indicate a relationship between each of a plurality of suggestion conditions and the settlement-related function screen. The determination module 102 and the suggestion module 103 execute the processing described later by referring to the history suggestion data.

The determination module 102 in Modification Example 2 determines whether or not the suggestion condition is satisfied based on the history information. For example, the determination module 102 may determine whether or not the suggestion condition is satisfied by determining whether or not the settlement date and time indicated by the history information is in the current time slot. When it is determined that the settlement date and time is not in the current time slot, the determination module 102 determines that the suggestion condition is not satisfied, and when it is determined that the settlement date and time is in the current time slot, the determination module 102 determines that the suggestion condition is satisfied. The determination module 102 may determine whether or not the suggestion condition is satisfied by determining whether or not the settlement amount indicated by the history information is equal to or more than a threshold value. When it is determined that the settlement amount is less than the threshold value, the determination module 102 determines that the suggestion condition is not satisfied, and when it is determined that the settlement amount is equal to or more than the threshold value, the determination module 102 determines that the suggestion condition is satisfied.

For example, the determination module 102 may determine whether or not the suggestion condition is satisfied by determining whether or not the number of settlements aggregated from the history information is equal to or more than a threshold value. When it is determined that the number of settlements is less than the threshold value, the determination module 102 determines that the suggestion condition is not satisfied, and when it is determined that the number of settlements is equal to or more than the threshold value, the determination module 102 determines that the suggestion condition is satisfied. When the history information is other information expressed as a numerical value as well, the determination module 102 may, in the same manner, determine whether or not the suggestion condition is satisfied by determining whether or not the numerical value indicated by the other information is equal to or more than a threshold value.

The suggestion module 103 in Modification Example 2 suggests the settlement-related function screen in the settlement app when it is determined that the suggestion condition is satisfied. The suggestion module 103 suggests the settlement-related function screen in the settlement app on condition (trigger) that the suggestion condition is determined to be satisfied. The suggestion module 103 does not suggest the settlement-related function screen in the settlement app when it is determined that the suggestion condition is not satisfied.

For example, when it is determined that the settlement date and time indicated by the history information is in the current time slot, the suggestion module 103 suggests the settlement-related function screen for using the settlement means used at the settlement date and time. When the settlement amount indicated by the history information is determined to be equal to or more than the threshold value, the suggestion module 103 suggests the settlement-related function screen for using specific settlement means (for example, settlement means used in settlements in which the settlement amount is equal to or more than the threshold value). When the number of settlements indicated by the history information is determined to be equal to or more than the threshold value, the suggestion module 103 suggests the settlement-related function screen for using specific settlement means (for example, settlement means most used in the past). Similarly, when the history information is another type of information, the suggestion module 103 may suggest the settlement-related function screen associated with the suggestion condition.

The suggestion system 1 according to Modification Example 2 acquires the history information relating to the history of the settlements executed by the settlement-related function. The suggestion system 1 determines whether or not the suggestion condition is satisfied based on the history information. When the suggestion system 1 determines that the suggestion condition is satisfied, the suggestion system 1 suggests the settlement-related function screen in the settlement app. As a result, the user can know the settlement-related function corresponding to the history information, and hence the suggestion system 1 can increase the convenience of the user.

### [6-3. Modification Example 3]

For example, in Modification Example 2, the history information may indicate an execution status of the settlements in a predetermined time period. The predetermined time period is the time period for which the history is to be acquired. The predetermined time period may be the entire time period in the past, but in Modification Example 3, the predetermined time period is assumed to be a part of the time period in the past. Further, the predetermined time period may be a fixed time period in the most recent past (for example, the most recent one week, one month, or half a year), or may not be the most recent time period. In Modification Example 3, a case in which the predetermined time period is the most recent one month is taken as an example. The history information acquisition module 104 acquires history information indicating the execution status of the settlements in the most recent one month. Details of the history information are as described in Modification Example 2.

The determination module 102 in Modification Example 3 determines whether or not the suggestion condition is satisfied by determining whether or not the execution status of the settlements in the predetermined time period indicated by the history information is a predetermined status. When it is determined that the execution status of the settlements in the predetermined time period is not the predetermined status, the determination module 102 determines that the suggestion condition is not satisfied, and when it is determined that the execution status of the settlements in the predetermined time period is the predetermined status, the determination module 102 determines that the suggestion condition is satisfied.

For example, the determination module 102 may determine whether or not the suggestion condition is satisfied by determining whether or not the current time slot is a time slot having a relatively large number of settlement dates and times for settlements performed in the predetermined time period. The determination module 102 may determine whether or not the suggestion condition is satisfied by determining whether or not an average settlement amount of the settlements performed in the predetermined time period is equal to or more than a threshold value. The determination module 102 may determine whether or not the suggestion condition is satisfied by determining whether or not the number of settlements performed in the predetermined time period is equal to or more than a threshold value. Similarly, when the execution status of the settlements performed in the predetermined time period is another type of information expressed by a numerical value, the determination module 102 may determine whether or not the suggestion condition is satisfied by determining whether or not the numerical value indicated by the another type of information is equal to or more than a threshold value.

The suggestion module 103 in Modification Example 3 suggests the settlement-related function screen in the settlement app when it is determined that the execution status of the settlements indicated by the history information is the predetermined status. The suggestion module 103 suggests the settlement-related function screen in the settlement app on condition (trigger) that the execution status of the settlements indicated by the history information is determined to be the predetermined status. The suggestion module 103 does not suggest the settlement-related function screen in the settlement app when it is determined that the execution status of the settlements indicated by the history information is not the predetermined status. For example, when it is determined that the current time slot is a time slot having a relatively large number of settlement dates and times for settlements performed in the predetermined time period, the suggestion module 103 suggests the settlement-related function screen for using the settlement means used in this time slot.

For example, when it is determined that the average settlement amount of the settlements performed in the predetermined time period is equal to or more than the threshold value, the suggestion module 103 suggests the settlement-related function screen for using specific settlement means (for example, settlement means having a relatively large or relatively small spending amount). When it is determined that the number of settlements performed in the predetermined time period is equal to or more than the threshold value, the suggestion module 103 suggests the settlement-related function screen for using specific settlement means (for example, settlement means having a relatively large or relatively small number of times of use). Similarly, when the history information is another type of information, the suggestion module 103 may suggest the settlement-related function screen associated with the suggestion condition.

The suggestion system 1 according to Modification Example 3 determines whether or not the suggestion condition is satisfied by determining whether or not the execution status of the settlements indicated by the history information is a predetermined status. When the suggestion system 1 determines that the execution status of the settlement indicated by the history information is the predetermined status, the suggestion system 1 suggests the settlement-related function screen in the settlement app. As a result, the user can know the settlement-related function corresponding to the execution status of the settlements in the predetermined time period, and hence the suggestion system 1 can increase the convenience of the user.

### [6-4. Modification Example 4]

For example, in a case in which the user executes a settlement with a credit card set as the payment source when shopping at a shopping mall, there is a possibility that the user may again execute a settlement at the shopping mall with the credit card set as the payment source. That is, when the user has executed a settlement in the past at the facility in which the user is present, the user may use the same settlement means as used then. Thus, in Modification Example 4, a case in which the facility in which the user is present is estimated based on the position of the user terminal 20, and the settlement-related function is suggested based on whether or not there is settlement means used by the user for a settlement at that facility is taken as an example.

The suggestion system 1 according to Modification Example 4 includes the position information acquisition module 105 and the facility estimation module 106. The position information acquisition module 105 acquires position information relating to a position of the user. The position information is information with which the position of the user is identifiable. The position information may be publicly-known information. In Modification Example 4, a case in which the position information is latitude and longitude is taken as an example, but the position information may be in another format. For example, the position information may be coordinates, an address, information on a wireless communication device, mobile base station information, information on a terminal arranged in a facility such as a shop, or other information.

In Modification Example 4, a case in which the user terminal 20 includes a GPS receiver is taken as an example. The user terminal 20 acquires the position information based on a signal received by the GPS receiver. The user terminal 20 may acquire the position information by using a global navigation satellite system (GNSS) other than GPS. The user terminal 20 may acquire the position information based on a communication result of the communication unit 23. The user terminal 20 may acquire the position information based on a publicly-known method. For example, the user terminal 20 transmits the position information to the settlement server 10 at any timing, such as when the settlement app is started. The position information acquisition module 105 acquires the position information from the user terminal 20.

The position information acquisition module 105 may acquire the position information from a terminal (for example, a point-of-sale (POS) terminal) arranged in a facility such as a shop. The position of the facility may be estimated as the position of the user. For example, a terminal (for example, a POS terminal) arranged in the facility may transmit a settlement request including the position information to the settlement server 10 when the settlement is executed. The settlement request is data transmitted at the time of the settlement. For example, the settlement request may include facility information (facility identification information) with which the facility such as a shop is identifiable. The position information acquisition module 105 may acquire the position information included in the settlement request. The position information acquisition module 105 may acquire the position information based on the facility information.

The data storage unit 100 in Modification Example 4 stores a facility database which stores various types of information relating to a facility at which the settlement service is usable. The facility is not limited to a shop, and may be another facility such as a public facility or an event facility. The facility may also be considered to be an affiliate of at least one of the settlement service or the loyalty points service. The facility database may store at least one piece of information on a facility that is affiliated with both the settlement service and the loyalty points service, a facility that is affiliated with the settlement service but is not affiliated with the loyalty points service, and a facility that is affiliated with the loyalty points service but is not affiliated with the settlement service.

For example, the facility database stores a facility ID with which the facility is identifiable, a facility name, location information relating to the location of the facility, a description of the facility, an image of the facility, or other information. In Modification Example 4, a case in which, like the position information, the location information is latitude and longitude is taken as an example, but the location information may be in another format. For example, the location information may be coordinates, an address, information on a wireless communication device, mobile base station information, or other information.

The facility estimation module 106 estimates the facility in which the user is present based on the position information. The facility estimation module 106 identifies facilities in the vicinity of the position indicated by the position information based on the facility database. The facility estimation module 106 may identify facilities for which a distance between the location indicated by the location information and the position indicated by the position information is less than a threshold value, or may identify a predetermined number of facilities in order of shortest distance (for example, the facility having the shortest distance). The facility estimation module 106 acquires information on, for example, the facility name of the identified facility from the facility database, and provides the facility information to the user. For example, the facility estimation module 106 provides information such as the facility name, the location information on the facility, the description of the facility, the image of the facility, or other information, to the user as the facility information. The trigger for the facility estimation module 106 to estimate the facility in which the user is present may be the settlement code C20 being read by a terminal of a facility.

The history information in Modification Example 4 indicates the settlement-related function used by the user in the past. For example, the history information indicates the specific settlement means used in the settlement-related function. The history information may indicate other information such as the settlement location. For example, when the user uses electronic money at a certain facility, the history information indicates that the electronic money has been used at the facility. When the user uses a credit card at a certain facility, the history information indicates that the credit card has been used at the facility. When the user executes a settlement at a certain facility, the settlement server 10 stores history information including the facility ID of the facility and information with which the settlement means used in the settlement is identifiable in the settlement database DB1 in association with the user ID of the user. The history information acquisition module 104 acquires that history information.

The determination module 102 in Modification Example 4 determines whether or not the suggestion condition is satisfied by determining, based on the history information, whether or not there is a settlement-related function used by the user at the facility in the past. For example, the determination module 102 determines whether or not the history information indicates the facility ID of the facility estimated by the facility estimation module 106, and whether or not the history information indicates information with which the settlement means used at the facility is identifiable. When it is determined that the history information does not indicate those pieces of information, the determination module 102 does not determine that the suggestion condition is satisfied, and when it is determined that the history information indicates those pieces of information, the determination module 102 determines that the suggestion condition is satisfied.

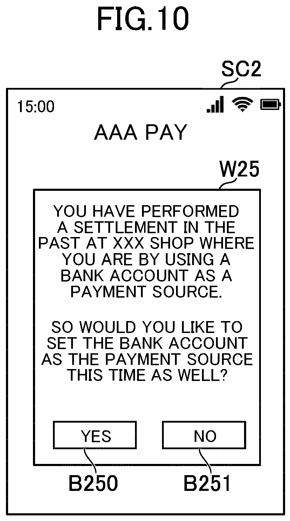

FIG. 10 is a view for illustrating an example of a screen displayed on the user terminal 20 in Modification Example 4. When it is determined that there is a settlement-related function which has been used by the user at the facility in the past, the suggestion module 103 suggests the settlement-related function screen of that settlement-related function in the settlement app. For example, as illustrated in FIG. 10, the suggestion module 103 suggests the settlement-related function screen by displaying the home screen SC2 including the window W25 suggesting that the same settlement means as the settlement means used by the user in the past at the facility estimated by the facility estimation module 106 be used in the settlement-related function. When the user selects the button B250, the settlement server 10 automatically sets the suggested settlement means as the payment source. As illustrated in FIG. 10, the settlement means is displayed as the payment source on the home screen SC2 of the settlement function.

The suggestion system 1 according to Modification Example 4 acquires the position information. The suggestion system 1 estimates the facility in which the user is present based on the position information. The history information indicates the settlement-related function used by the user in the past. The suggestion system 1 determines whether or not the suggestion condition is satisfied by determining, based on the history information, whether or not there is a settlement-related function used by the user at the facility in the past. When the suggestion system 1 determines that there is a settlement-related function used by the user at the facility in the past, the suggestion system 1 suggests the settlement-related function screen of the settlement-related function in the settlement app. As a result, the user can know the settlement-related function used in the past at the same facility, and hence the suggestion system 1 can increase the convenience of the user.

### [6-5. Modification Example 5]

For example, like in Modification Examples 3 and 4, when a suggestion is made based on history information, the settlement-related function screen of a settlement-related function that is used relatively frequently by the user may be suggested, but in Modification Example 5, a case in which the settlement-related function screen of a settlement-related function that is relatively unused by the user is suggested is taken as an example. Like in Modification Example 4, it is assumed that the history information in Modification Example 5 indicates the settlement-related function used by the user in the past.

The determination module 102 in Modification Example 5 determines whether or not the suggestion condition is satisfied by determining, based on the history information, whether or not there is a settlement-related function that is relatively unused by the user. The determination module 102 determines whether or not the settlement-related function is, out of the plurality of settlement-related functions, a settlement-related function which is relatively unused by the user. A settlement-related function which is relatively unused by the user is a settlement-related function for which the number of times of use by the user is less than a threshold value, the settlement-related function that is used the least by the user, or a settlement-related function having a low ranking in order of number of times of use by the user (for example, a ranking equal to or less than a predetermined rank).

For example, the determination module 102 aggregates the number of times the user has used each of the plurality of settlement-related functions based on the history information. In the case of a credit card settlement-related function and an electronic money settlement-related function, the determination module 102 aggregates the number of times the credit card settlement-related function has been used and the number of times the electronic money settlement-related function has been used based on the type of settlement means indicated by the history information. The determination module 102 may determine whether or not the suggestion condition is satisfied by determining whether or not there is, out of those two settlement-related functions, a settlement-related function having the number of times of use that is less than a threshold value. The settlement-related function for which the number of times of use is to be aggregated is not limited to those two settlement-related functions. When the number of times of use is to be aggregated for another settlement-related function, such as the loyalty points function, and the loyalty points function is relatively unused, the loyalty points function may be suggested to the user.

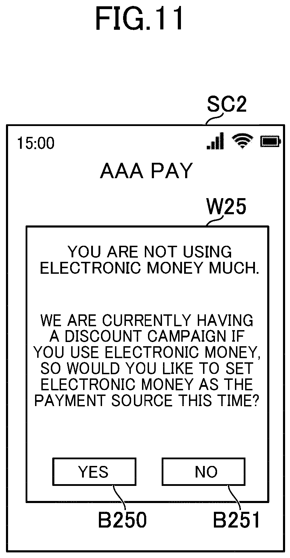

FIG. 11 is a view for illustrating an example of a screen displayed on the user terminal 20 in Modification Example 5. When it is determined that there is a settlement-related function that is relatively unused by the user, the suggestion module 103 in Modification Example 5 suggests the settlement-related function screen of that settlement-related function in the settlement app. For example, when the electronic money settlement-related function is relatively unused by the user, as illustrated in FIG. 11, the suggestion module 103 suggests the settlement-related function screen by displaying the home screen SC2 including the window W25 suggesting that the electronic money settlement-related function be used. When the user selects the button B250, the settlement server 10 automatically sets electronic money as the payment source. As illustrated in FIG. 11, the settlement means is displayed as the payment source on the home screen SC2 of the settlement function.

The suggestion system 1 according to Modification Example 5 determines whether or not the suggestion condition is satisfied by determining, based on the history information, whether or not there is a settlement-related function that is relatively unused by the user. When the suggestion system 1 determines that there is a settlement-related function that is relatively unused by the user, the suggestion system 1 suggests the settlement-related function screen of the settlement-related function in the settlement app. As a result, the user can know the settlement-related function that is not usually used, and hence the suggestion system 1 can increase the convenience of the user.

### [6-6. Modification Example 6]

For example, in Modification Examples 2 to 5, the cases in which whether or not the suggestion condition is satisfied is determined based on the history information have been taken as examples. However, in place of the history of the settlements executed in the past, the suggestion system 1 may determine whether or not the suggestion condition is satisfied based on the settlement-related function being used at the time. The function screen in Modification Example 6 is, like Modification Examples 2 to 5, a settlement-related function screen for providing, out of a plurality of functions, the settlement-related function relating to the settlement executed from the settlement app.

The suggestion system 1 according to Modification Example 6 includes the use information acquisition module 107. When the settlement is executed by the settlement-related function, the use information acquisition module 107 acquires use information relating to the settlement to be executed. The use information is information indicating details of a settlement to be executed, or details of the settlement currently being executed. For example, the use information may indicate a settlement date and time, a settlement amount, the number of settlements, a settlement location, the number of loyalty points awarded by the settlement, the balance of electronic money, for example, after the settlement, information on the settlement means set in the payment source, whether or not the loyalty points function is used, or a combination thereof. The settlement means is used not only for settlement but also for adding money, and hence the use information may indicate an amount of money added, a date and time when money is added, information on the settlement means set as the money addition source, or a combination thereof. The use information acquisition module 107 generates use information each time a settlement is executed. The use information acquired by the use information acquisition module 107 may be stored in the settlement database DB1 as history information.

The determination module 102 in Modification Example 6 determines whether or not the suggestion condition is satisfied based on the use information. For example, the determination module 102 may determine whether or not the suggestion condition of the settlement function of other settlement means other than loyalty points is satisfied by determining whether or not the use information indicates that the loyalty points function is to be used. When it is determined that the use information does not indicate that the loyalty points function is to be used, the determination module 102 determines that the suggestion condition of the settlement function of the other settlement means is not satisfied, and when it is determined that the use information indicates that the loyalty points function is to be used, the determination module 102 determines that the suggestion condition of the settlement function of the other settlement means is satisfied.

For example, the determination module 102 may determine whether or not the suggestion condition of the loyalty points function is satisfied by determining whether or not the use information indicates that the settlement function of other settlement means is to be used. When it is determined that the use information does not indicate that the settlement function of the other settlement means is to be used, the determination module 102 determines that the suggestion condition of the loyalty points function is not satisfied, and when it is determined that the use information indicates that the settlement function of the other settlement means is to be used, the determination module 102 determines that the suggestion condition of the loyalty points function is satisfied.

For example, the determination module 102 may determine whether or not the suggestion condition is satisfied by determining whether or not the settlement means indicated by the use information is predetermined settlement means. When it is determined that the settlement means indicated by the use information is not the predetermined settlement means, the determination module 102 determines that the suggestion condition is not satisfied, and when it is determined that the settlement means indicated by the use information is the predetermined settlement means, the determination module 102 determines that the suggestion condition is satisfied. The determination module 102 may determine whether or not the suggestion condition is satisfied by determining whether or not the settlement date and time indicated by the use information is in a predetermined time slot. When it is determined that the settlement date and time is not in the predetermined time slot, the determination module 102 determines that the suggestion condition is not satisfied, and when it is determined that the settlement date and time is in the predetermined time slot, the determination module 102 determines that the suggestion condition is satisfied.

For example, the determination module 102 may determine whether or not the suggestion condition is satisfied by determining whether or not the settlement amount indicated by the use information is equal to or more than a threshold value. When it is determined that the settlement amount is less than the threshold value, the determination module 102 determines that the suggestion condition is not satisfied, and when it is determined that the settlement amount is equal to or more than the threshold value, the determination module 102 determines that the suggestion condition is satisfied. When the use information is other information expressed as a numerical value as well, the determination module 102 may, in the same manner, determine whether or not the suggestion condition is satisfied by determining whether or not the numerical value indicated by the other information is equal to or more than a threshold value.

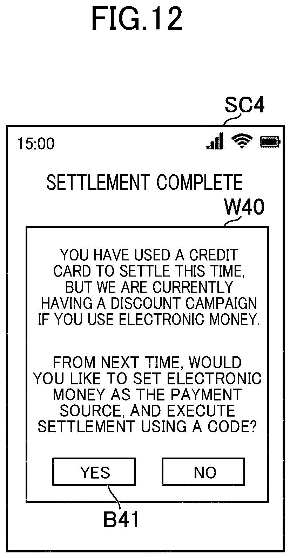

FIG. 12 is a view for illustrating an example of a screen displayed on the user terminal 20 in Modification Example 6. The suggestion module 103 in Modification Example 6 suggests the settlement-related function screen in the settlement app when it is determined that the suggestion condition is satisfied. The suggestion module 103 suggests the settlement-related function screen in the settlement app on condition (trigger) that the suggestion condition is determined to be satisfied. The suggestion module 103 does not suggest the settlement-related function screen in the settlement app when it is determined that the suggestion condition is not satisfied. In the example of FIG. 12, the suggestion module 103 suggests the settlement-related function screen of the settlement-related function by displaying a window W40 suggesting the settlement-related function of other settlement means (for example, electronic money) other than the settlement means used by the user (for example, credit card) on a settlement completion screen SC4 indicating that the settlement is complete. When the user selects a button B41, the payment source is changed to electronic money, and then the home screen SC2 of the settlement function is displayed as the settlement-related function screen.

The suggestion system 1 according to Modification Example 6 acquires, when the settlement is executed by the settlement-related function, the use information relating to the executed settlement. The suggestion system 1 determines whether or not the suggestion condition is satisfied based on the use information. When the suggestion system 1 determines that the suggestion condition is satisfied, the suggestion system 1 suggests the settlement-related function screen in the settlement app. As a result, the user can know the settlement-related function corresponding to the use information, and hence the suggestion system 1 can increase the convenience of the user.

### [6-7. Modification Example 7]

For example, in Modification Example 6, the plurality of functions may include, as the settlement-related function, a loyalty points function in which loyalty points are used, and a settlement function in which settlement means different from the loyalty points is used. In this case, the use information acquisition module 107 acquires, when one of the loyalty points function and the settlement function is used, use information with which the one of the loyalty points function and the settlement function is identifiable. The "one of the loyalty points function and the settlement function" is any one of the loyalty points function and the settlement function used by the user.

For example, the use information acquisition module 107 acquires use information indicating the used one of the loyalty points function and the settlement function. The acquired use information may be stored in the settlement database DB1, but in Modification Example 7, it is assumed that the use information is acquired from a terminal of a facility such as a shop. For example, when the terminal of the facility reads the loyalty points code C24, the terminal transmits use information indicating that the loyalty points function has been used to the settlement server 10. The transmitted use information includes the loyalty points code ID acquired from loyalty points code C24. The use information acquisition module 107 acquires the use information indicating that the loyalty points function has been used from the terminal of the facility. For example, when the terminal of the facility reads the settlement code C20, the terminal transmits use information indicating that the settlement function has been used to the settlement server 10. The transmitted use information includes the settlement code ID acquired from the settlement code C20. The use information acquisition module 107 acquires the use information indicating that the settlement function has been used from the terminal of the facility.

The determination module 102 in Modification Example 7 determines whether or not the suggestion condition of another of the loyalty points function and the settlement function is satisfied based on the use information. The another of the loyalty points function and the settlement function is, out of the loyalty points function and the settlement function, the function that is not mentioned earlier. For example, when the use information indicates that the settlement function of settlement means different from the loyalty points is used, the determination module 102 determines that the suggestion condition of the loyalty points function is satisfied. When the use information indicates that the loyalty points function is used, the determination module 102 determines that the suggestion condition of the settlement function of settlement means different from the loyalty points is satisfied. Those determination methods are as described in Modification Example 6.

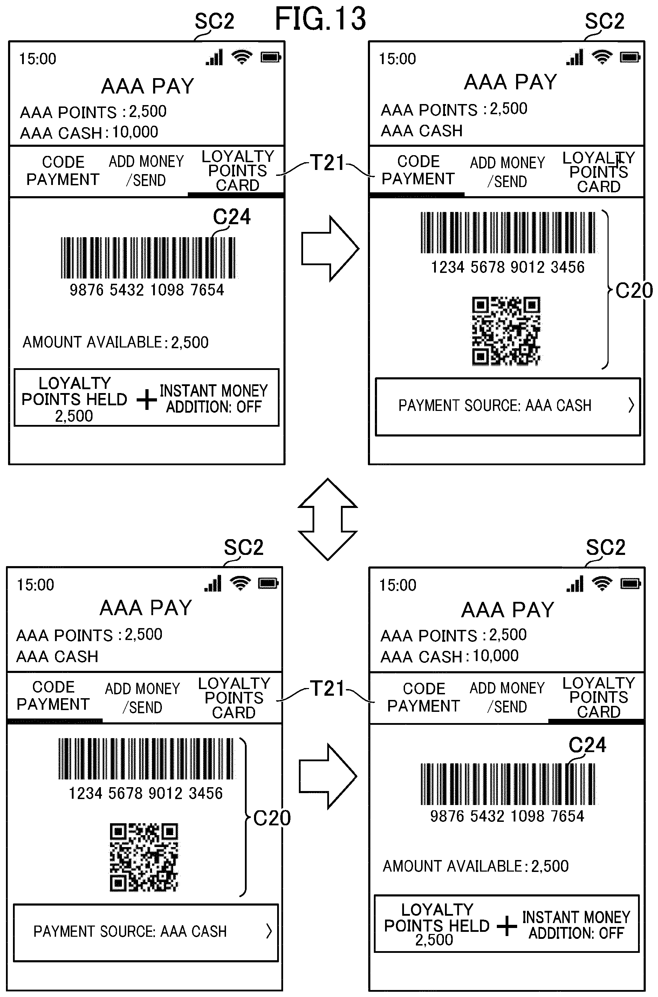

FIG. 13 is a view for illustrating an example of screens displayed on the user terminal 20 in Modification Example 7. When it is determined that the suggestion condition of the another of the loyalty points function and the settlement function is satisfied, the suggestion module 103 suggests the settlement-related function screen of the another of the loyalty points function and the settlement function in the settlement app. The suggestion module 103 suggests the settlement-related function screen of the another of the loyalty points function and the settlement function in the settlement app on condition (trigger) that the suggestion condition of the another of the loyalty points function and the settlement function is determined to be satisfied. When it is determined that the suggestion condition of the another of the loyalty points function and the settlement function is not satisfied, the suggestion module 103 does not suggest the settlement-related function screen of the another of the loyalty points function and the settlement function in the settlement app. In addition, the suggestion module 103 may suggest the settlement function after the user uses the loyalty points function, or may suggest the loyalty points function after the user uses the settlement function.

For example, as illustrated in the upper part of FIG. 13, when the loyalty points code C24 is read and the loyalty points function is used, it is determined that the suggestion condition of the settlement function of settlement means different from the loyalty points is satisfied. In this case, the suggestion module 103 suggests the home screen SC2 of the settlement function by causing the screen to automatically transition from the home screen SC2 of the loyalty points function to the home screen SC2 of the settlement function. As illustrated in the lower part of FIG. 13, when the settlement code C20 is read and the settlement function is used, it is determined that the suggestion condition of the loyalty points function is satisfied. In this case, the suggestion module 103 suggests the home screen SC2 of the loyalty points function by causing the screen to automatically transition from the home screen SC2 of the settlement function to the home screen SC2 of the loyalty points function.

The suggestion system 1 according to Modification Example 7 acquires, when one of the loyalty points function and the settlement function is used, use information with which the one of the loyalty points function and the settlement function is identifiable. The suggestion system 1 determines whether or not the suggestion condition of the another of the loyalty points function and the settlement function is satisfied based on the use information. When it is determined that the suggestion condition of the another of the loyalty points function and the settlement function is satisfied, the suggestion system 1 suggests the settlement-related function screen of the another of the loyalty points function and the settlement function in the settlement app. As a result, the user is not required to perform an operation for switching between the loyalty points function and the settlement function, and hence the suggestion system 1 can increase the convenience of the user. For example, in the example of the upper part of FIG. 13, when the suggestion system 1 detects reading of the loyalty points code C24 from the use information, the suggestion system 1 can automatically display the settlement code C20. In the example of the lower part of FIG. 13, when the suggestion system 1 detects that the settlement code C20 is read from the use information, the suggestion system 1 can automatically display the loyalty points code C24.

### [6-8. Modification Example 8]

For example, in Modification Example 7, the case in which, when one of the loyalty points function and the settlement function is used, it is determined that the suggestion condition of the another of the loyalty points function and the settlement function is satisfied has been taken as an example. Depending on the facility in which the user is present, the another of the loyalty points function and the settlement function may not be usable. Thus, in Modification Example 8, a case in which whether or not the suggestion condition is satisfied is determined by determining whether or not the another of the loyalty points function and the settlement function is usable at the facility in which the user is present is taken as an example. The suggestion system 1 according to Modification Example 8 includes the position information acquisition module 105 and the facility estimation module 106. The position information acquisition module 105 and the facility estimation module 106 are as described in Modification Example 4.

The determination module 102 in Modification Example 8 determines whether or not the suggestion condition of the another of the loyalty points function and the settlement function (the function not used earlier) is satisfied by determining whether or not the another of the loyalty points function and the settlement function is usable at the facility estimated by the facility estimation module 106. It is assumed that usability information indicating whether each of the loyalty points function and the settlement function is usable at the facility is stored in the facility database described in Modification Example 4. The usability information on each facility is stored in the facility database in association with the facility ID of the facility. The usability information indicates that only the loyalty points function is usable, only the settlement function is usable, or both of the loyalty points function and the settlement function are usable. The determination module 102 refers to the usability information on the facility estimated by the facility estimation module 106, and determines whether the another of the loyalty points function and the settlement function is usable.

For example, when the use information indicates the use of the loyalty points function (when the one of the loyalty points function and the settlement function is the loyalty points function), the determination module 102 determines whether the settlement function, which is the another of the loyalty points function and the settlement function, is usable at the facility based on the usability information on the facility estimated by the facility estimation module 106. When the use information indicates the use of the settlement function (when the one of the loyalty points function and the settlement function is the settlement function), the determination module 102 determines whether the loyalty points function, which is the another of the loyalty points function and the settlement function, is usable at the facility based on the usability information on the facility estimated by the facility estimation module 106.

The suggestion module 103 in Modification Example 8 suggests the settlement-related function screen of the another of the loyalty points function and the settlement function in the settlement app when it is determined that the another of the loyalty points function and the settlement function is usable at the facility estimated by the facility estimation module 106. The suggestion module 103 suggests the settlement-related function screen of the another of the loyalty points function and the settlement function in the settlement app on condition that the another of the loyalty points function and the settlement function is determined to be usable at the facility estimated by the facility estimation module 106. The suggestion module 103 does not suggest the settlement-related function screen of the another of the loyalty points function and the settlement function in the settlement app when the another of the loyalty points function and the settlement function is determined to be not usable at the facility estimated by the facility estimation module 106.

In the example of the upper part of FIG. 13, when the loyalty points code C24 is read and the use information indicates the use of the loyalty points function, the suggestion module 103 suggests the home screen SC2 of the settlement function to the user on condition that the settlement function is determined to be usable at the facility estimated by the facility estimation module 106 (that is, on condition that the facility is affiliated with the settlement service). When the settlement code C20 is read and the use information indicates the use of the settlement function, the suggestion module 103 suggests the home screen SC2 of the loyalty points function to the user on condition that the loyalty points function is determined to be usable at the facility estimated by the facility estimation module 106 (that is, on condition that the facility is affiliated with the loyalty points service).

The suggestion system 1 according to Modification Example 8 acquires the position information relating to the position of the user terminal 20. The suggestion system 1 estimates the facility in which the user is present based on the position information. The suggestion system 1 determines whether or not the suggestion condition of another settlement-related function is satisfied by determining whether or not the another settlement-related function is usable at the facility. When the suggestion system 1 determines that the another settlement-related function is usable at the facility, the suggestion system 1 suggests the settlement-related function screen of the another settlement-related function in the settlement app. As a result, when one of the loyalty points function and the settlement function is used, in a case in which the another of the loyalty points function and the settlement function is usable at the facility in which the user is present, the user is not required to perform an operation for switching the function to the another settlement-related function, and hence the suggestion system 1 can increase the convenience of the user.

### [6-9. Modification Example 9]

For example, the plurality of functions may include a settlement function that uses a balance and a money addition function of adding money to the balance. The settlement function that uses a balance may be an electronic money settlement function, or may be a balance settlement function that uses a balance not called electronic money. In Modification Example 9, a case in which a money addition function is suggested depending on the balance when the settlement is executed by a settlement function that uses a balance is taken as an example. In Modification Example 9, the money addition function is suggested at the time of the settlement in the exemplary case, but the money addition function may be suggested at another time other than the time of the settlement (for example, when the settlement app is started, when the user performs a predetermined operation, or when a predetermined date and time arrives).

For example, when the settlement is executed by a settlement function that uses a balance, the use information acquisition module 107 may acquire use information relating to the balance after the settlement is executed. The use information in Modification Example 9 indicates the balance after the settlement by a settlement function that uses a balance. The balance is a value obtained by subtracting the settlement amount from the balance before the settlement. It is assumed that information indicating the balance before the settlement is stored in the settlement database DB1. The use information acquisition module 107 acquires the use information by calculating a numerical value obtained by subtracting the settlement amount included in the settlement request received from a terminal of a shop, for example, from the balance before the settlement indicated by the information indicating the balance before the settlement. When the money addition function is suggested at another time other than the time of the settlement, the use information acquisition module 107 is not required to acquire use information in order to suggest the money addition function.

The determination module 102 in Modification Example 9 determines whether or not the suggestion condition is satisfied by determining whether or not the balance is less than a threshold value. It is assumed that the threshold value is stored in the data storage unit 100. The threshold value may be common to all users, or a value corresponding to the user may be set. When it is determined that the balance is equal to or more than the threshold value, the determination module 102 does not determine that the suggestion condition is satisfied, and when it is determined that the balance is less than the threshold value, the determination module 102 determines that the suggestion condition is satisfied. The determination by the determination module 102 may be executed at the time of the settlement or at another time other than the time of the settlement. For example, the determination module 102 may determine whether or not the suggestion condition is satisfied by determining whether or not the balance is less than the threshold value when the settlement app is started, when the user performs a predetermined operation, or when a predetermined date and time arrives.

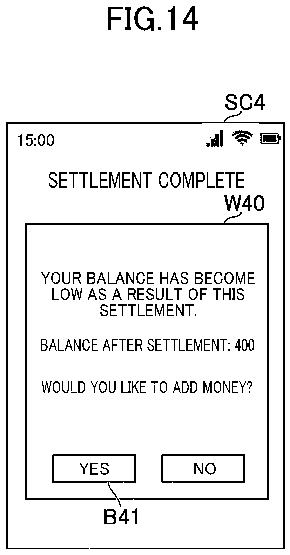

FIG. 14 is a view for illustrating an example of a screen displayed on the user terminal 20 in Modification Example 9. The suggestion module 103 in Modification Example 9 suggests the function screen of the money addition function in the settlement app when it is determined that the balance is less than the threshold value. The suggestion module 103 suggests the function screen of the money addition function in the settlement app on condition that the balance is determined to be less than the threshold value. In the example of FIG. 14, the suggestion module 103 suggests the function screen of the money addition function by displaying, on the settlement completion screen SC4, the window W40 for transitioning to the home screen SC2 of the money addition function. The suggestion module 103 may suggest the function screen of the money addition function at another time other than the time of the settlement. For example, the suggestion module 103 may suggest the function screen of the money addition function on condition that the balance is determined to be less than the threshold value when the settlement app is started, when the user performs a predetermined operation, or when a predetermined date and time arrives.

For example, when the user selects the button B41, the user terminal 20 transitions from the settlement completion screen SC4 to the home screen SC2 of the money addition function. The home screen SC2 of the money addition function is an example of the function screen of the money addition function. When the user does not select the button B41, the user terminal 20 does not transition to the home screen SC2 of the money addition function. When it is determined that the balance is equal to or more than the threshold value, the suggestion module 103 does not suggest the function screen of the money addition function in the settlement app. In this case, the window W40 is not displayed on the settlement completion screen SC4, and the details of the executed settlement are displayed.

The suggestion system 1 according to Modification Example 9 acquires, when the settlement is executed by using a settlement function that uses a balance, use information relating to the balance after the settlement is executed. The suggestion system 1 determines whether or not the suggestion condition is satisfied by determining whether or not the balance is less than a threshold value. When the suggestion system 1 determines that the balance is less than the threshold value, the suggestion system 1 suggests the function screen of the money addition function in the settlement app. As a result, the user can immediately use the money addition function when the balance becomes less than the threshold value due to a settlement, and hence the suggestion system 1 can increase the convenience of the user.

### [6-10. Modification Example 10]

For example, the functions that the user can use may be limited depending on the facility in which the user is present. Thus, in Modification Example 10, a case in which a function that is usable at the facility in which the user is present is suggested is taken as an example. The suggestion system 1 according to Modification Example 10 includes the position information acquisition module 105 and the facility estimation module 106. The position information acquisition module 105 and the facility estimation module 106 are as described in Modification Example 4.

The determination module 102 in Modification Example 10 determines whether or not the suggestion condition is satisfied by determining whether or not the function to be suggested is usable at the facility estimated by the facility estimation module 106. It is assumed that usability information indicating whether or not the function to be suggested is usable at the estimated facility is stored in the facility database described in Modification Example 4. The usability information indicates the functions usable at the facility. The usability information on each facility is stored in the facility database in association with the facility ID of the facility.

For example, the determination module 102 determines whether or not the suggestion condition is satisfied by referring to the usability information on the facility estimated by the facility estimation module 106, and identifying the functions usable at the facility. The functions usable at the facility may be the same as the loyalty points function and the settlement function described in Modification Example 8, or may be a specific type of settlement means usable as a settlement function, or may be another function other than the settlement-related function (for example, a function for checking in). For example, out of the plurality of types of settlement means such as a credit card, electronic money, and a bank account, the settlement means usable at each facility may be indicated in the usability information. The determination module 102 determines that the suggestion condition of the functions not indicated in the usability information on the facility is not satisfied, and determines that the suggestion condition of the functions indicated in the usability information on the facility is satisfied.

The suggestion module 103 in Modification Example 10 suggests the function screen in the settlement app when it is determined that the function to be suggested is usable at the facility estimated by the facility estimation module 106. The suggestion module 103 suggests the function screen in the settlement app on condition that the function to be suggested is determined to be usable at the facility. When it is not determined that the function to be suggested is usable at the facility, the suggestion module 103 does not suggest the function screen in the settlement app.

For example, when the settlement app is started, the user terminal 20 transmits position information to the settlement server 10. When the settlement server 10 acquires the position information from the user terminal 20, the settlement server 10 estimates the facility in which the user is present based on processing executed by the position information acquisition module 105 and the facility estimation module 106. The determination module 102 determines whether or not the suggestion condition of the function to be suggested is satisfied by identifying the functions usable at the facility. The suggestion module 103 suggests a function having a suggestion condition that has been determined to be satisfied. For example, the suggestion module 103 suggests a function usable at the facility in which the user is present in the window W25 of the home screen SC2 displayed after the settlement app is started.

For example, when only credit cards are usable at the facility in which the user is present, the suggestion module 103 displays, on the home screen SC2, a window W25 which suggests using the credit card settlement-related function. When only electronic money is usable at the facility in which the user is present, the suggestion module 103 displays, on the home screen SC2, a window W25 which suggests using the electronic money settlement-related function. Similarly, for other facilities, the suggestion module 103 makes a suggestion by displaying, on the home screen SC2, a window W25 which shows the settlement-related functions usable at the facility in which the user is present. When suggesting another function other than a settlement-related function as well, the suggestion module 103 may suggest another function other than a settlement-related function in the same manner based on a result of determination by the determination module 102.

The suggestion module 103 may suggest the function screen in the settlement app on condition that a time spent by the user in the facility estimated by the facility estimation module 106 is equal to or longer than a predetermined time. For example, the suggestion module 103 may encourage a user who has not used a settlement-related function even though the time spent by the user in the facility is equal to or longer than a predetermined time to use a settlement-related function by suggesting the function screen to the user.

The suggestion system 1 according to Modification Example 10 acquires position information relating to a position of the user terminal 20. The suggestion system 1 estimates the facility in which the user is present based on the position information. The suggestion system 1 determines whether or not the suggestion condition is satisfied by determining whether or not the function to be suggested is usable at the facility. When the suggestion system 1 determines that the function is usable at the facility, the suggestion system 1 suggests the function screen in the settlement app. As a result, the user can know the existence of the function usable at the facility in which the user is present, and hence the suggestion system 1 can increase the convenience of the user.

### [6-11. Modification Example 11]

For example, the method of determining whether or not the suggestion condition is satisfied is not limited to the examples described in the embodiment and Modification Examples 1 and 2. The function that is appropriate to be suggested to the user may be inferred from an operation by the user in the settlement app. Thus, in Modification Example 11, a case in which whether or not the suggestion condition is satisfied is determined based on an operation by the user in the settlement app is taken as an example.

The suggestion system 1 according to Modification Example 11 includes the operation information acquisition module 108. The operation information acquisition module 108 acquires operation information relating to an operation by the user in the settlement app. The operation information is information indicating a history of operations by the user in the settlement app. In Modification Example 11, a case in which the operation information is information on an operation unrelated to the functions of the settlement app is taken as an example, but the operation information may indicate the number of times the user has selected each of the plurality of functions of the settlement app. The operation information may be stored in the settlement database DB1. The operation information may indicate the number of times a certain icon in the settlement app has been selected. The operation information may indicate the number of times a certain screen has been displayed, in place of an index such as the number of clicks.

For example, when an operation is performed in the settlement app, the user terminal 20 transmits operation information indicating details of the operation to the settlement server 10. When the user selects some sort of function, the user terminal 20 may transmit operation information indicating that that function has been selected to the settlement server 10. When the settlement server 10 receives the operation information from the user terminal 20, the settlement server 10 stores the operation information in the settlement database DB1. When the operation information indicates the number of times each function has been selected, the settlement server 10 may update, when operation information is received from the user terminal 20, the operation information in the settlement database DB1 such that the number of times the function indicated by the operation information has been selected is increased. The operation information stored in the settlement database DB1 may indicate each operation by the user, or may indicate the number of times each of a plurality of functions has been selected.

The determination module 102 in Modification Example 11 determines whether or not the suggestion condition is satisfied based on the operation information. For example, the determination module 102 determines whether or not the suggestion condition is satisfied by determining whether or not the number of times the user has selected a specific icon is equal to or more than a threshold value. The determination module 102 may determine that the suggestion condition is not satisfied when it is determined that the number of times the user has selected the specific icon is less than the threshold value, and determine that the suggestion condition is satisfied when it is determined that the number of times the user has selected the specific icon is equal to or more than the threshold value. When it is determined that the suggestion condition is satisfied, the suggestion module 103 may suggest to the user the function associated with the icon. It is assumed that data indicating a relationship between the icon and the function to be suggested is stored in advance in the data storage unit 100. The suggestion module 103 may identify the function to be suggested based on the data.

The suggestion system 1 according to Modification Example 11 acquires operation information relating to an operation by the user in the settlement app. The suggestion system 1 determines whether or not the suggestion condition is satisfied based on the operation information. As a result, the user can know the function corresponding to the operation performed by the user, and hence the suggestion system 1 can increase the convenience of the user.

### [6-12. Modification Example 12]

For example, in Modification Example 11, the determination module 102 may determine whether or not the suggestion condition is satisfied by determining whether or not there is a function that is used by the user relatively more frequently or relatively less frequently based on the operation information. The determination module 102 may determine, based on the number of times each function which is indicated by the operation information is selected, that a function having the number of times of use by the user which is equal to or more than a threshold value as a function that is used by the user relatively more frequently. The determination module 102 may determine, based on the number of times each function which is indicated by the operation information is selected, that a function having the number of times of use by the user up to a predetermined usage ranking from the highest ranking as a function that is used by the user relatively more frequently. The determination module 102 may determine, based on the number of times each function which is indicated by the operation information is selected, that a function having the number of times of use by the user which is less than a threshold value as a function that is used by the user relatively less frequently. The determination module 102 may determine, based on the number of times each function which is indicated by the operation information is selected, that a function having the number of times of use by the user up to a predetermined usage ranking from the lowest ranking as a function that is used by the user relatively less frequently.

When it is determined that there is a function that the user has used relatively more frequently or relatively less frequently, the suggestion module 103 in Modification Example 12 suggests the function screen of that function in the settlement app. For example, the suggestion module 103 suggests the function screen of a function that the user has used relatively more frequently. When the suggestion is made immediately after the start of the settlement app, the suggestion module 103 suggests the function screen of the function by displaying a window W25 suggesting the function that the user has used relatively more frequently on the home screen SC2 when the settlement app is started. The suggestion module 103 may suggest the function screen of the function that is used relatively more frequently by the user by displaying a screen of the relatively more frequently used function itself in place of displaying the window W25 (for example, when the user uses the loyalty points function relatively more frequently, the home screen SC2 of the loyalty points function).

For example, the suggestion module 103 may suggest the function screen of a function that the user has used relatively less frequently. When the suggestion is made immediately after the start of the settlement app, the suggestion module 103 suggests the function screen of the function by displaying a window W25 suggesting the function that the user has used relatively less frequently on the home screen SC2 when the settlement app is started. The suggestion module 103 may suggest the function screen of the function that is used relatively less frequently by the user by displaying a screen of the relatively less frequently used function itself in place of displaying the window W25 (for example, when the user uses the loyalty points function relatively less frequently, the home screen SC2 of the loyalty points function).

The suggestion system 1 according to Modification Example 12 determines whether or not the suggestion condition is satisfied by determining whether or not there is a function that the user has used relatively more frequently or relatively less frequently based on the operation information. When the suggestion system 1 determines that there is a function that the user has used relatively more frequently or relatively less frequently, the suggestion system 1 suggests the function screen of that function in the settlement app. As a result, the user can know the existence of a function that the user has used relatively more frequently or relatively less frequently, and hence the suggestion system 1 can increase the convenience of the user.

### [6-13. Modification Example 13]

For example, in Modification Examples 11 and 12, the operation information acquisition module 108 may acquire the operation information relating to an operation by the user immediately before the settlement app is ended. In Modification Example 13, a case in which the operation information indicates a function selected by the user immediately before the settlement app is ended is taken as an example. For example, the operation information may be the settlement means selected by the user immediately before ending the settlement app, or may indicate that the user has selected the loyalty points function immediately before ending the settlement app. The user terminal 20 records, in the storage unit 22, a history of the operations performed by the user while the settlement app is running, and transmits operation information indicating the last operation to be performed to the settlement server 10 when the settlement app is ended.

For example, the operation information acquisition module 108 acquires the operation information indicating the operation by the user immediately before the settlement app is ended by receiving the operation information from the user terminal 20. The user terminal 20 may transmit the operation information to the settlement server 10 each time the user performs some sort of operation, and the operation information acquisition module 108 may acquire, as the operation information relating to the operation by the user immediately before the settlement app is ended, the operation information acquired just before receiving a notification indicating that the settlement app has been ended from the user terminal 20.

The determination module 102 in Modification Example 13 determines whether or not the suggestion condition is satisfied based on the operation by the user immediately before the settlement app is ended which is indicated by the operation information. For example, the determination module 102 determines whether or not the suggestion condition of the settlement means is satisfied based on the settlement means indicated by the operation information. The suggestion module 103 suggests the screen of the settlement function of the settlement means selected immediately before the user ends the settlement app. For example, when the operation information indicates that the settlement means selected immediately before the user ends the settlement app is a credit card, the suggestion module 103 suggests the credit card settlement function the next time the settlement app is started. When the operation information indicates that the user has selected the loyalty points function immediately before ending the settlement app, the suggestion module 103 suggests the loyalty points function the next time the settlement app is started.

The suggestion system 1 according to Modification Example 13 acquires the operation information relating to an operation by the user immediately before the settlement app is ended. The suggestion system 1 determines whether or not the suggestion condition is satisfied based on the operation by the user immediately before the settlement app is ended which is indicated by the operation information. As a result, the user can know the function corresponding to the operation performed immediately before the settlement app is ended, and hence the suggestion system 1 can increase the convenience of the user.

### [6-14. Modification Example 14]

For example, as described in the embodiment, the plurality of functions may include the loyalty points function in which loyalty points are used. In this case, the determination module 102 may determine whether or not the suggestion condition is satisfied by determining whether or not time-limited loyalty points usable in the loyalty points function have been awarded to the user. Time-limited loyalty points are loyalty points in which an expiration date is set. For example, time-limited loyalty points are awarded to the user through use of the settlement service or use of a service other than the settlement service. The mechanism by which time-limited loyalty points are awarded may be the same as that of a publicly-known loyalty points service.

In Modification Example 14, it is assumed that information indicating a presence or absence of time-limited loyalty points is stored in the loyalty points database DB2. The determination module 102 determines whether or not time-limited loyalty points have been awarded to the user based on the information stored in the loyalty points database DB2. When it is determined that time-limited loyalty points usable in the loyalty points function have not been awarded to the user, the determination module 102 may not determine that the suggestion condition is satisfied, and when it is determined that time-limited loyalty points usable in the loyalty points function have been awarded to the user, the determination module 102 may determine that the suggestion condition is satisfied.

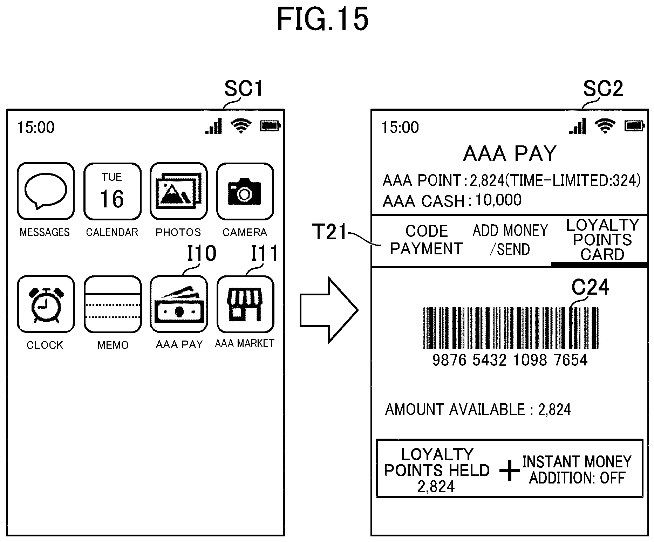

FIG. 15 is a view for illustrating an example of screens displayed on the user terminal 20 in Modification Example 14. When it is determined that time-limited loyalty points have been awarded to the user, the suggestion module 103 in Modification Example 14 suggests the function screen of the loyalty points function in the settlement app. The suggestion module 103 suggests the function screen of the loyalty points function in the settlement app on condition that it is determined that time-limited loyalty points have been awarded to the user. In the example of FIG. 15, the suggestion module 103 suggests the function screen of the loyalty points function by displaying the home screen SC2 of the loyalty points function together with the balance of the time-limited loyalty points. When it is not determined that time-limited loyalty points have been awarded to the user, the suggestion module 103 does not suggest the function screen of the loyalty points function in the settlement app.

The suggestion system 1 according to Modification Example 14 determines whether or not the suggestion condition is satisfied by determining whether or not time-limited loyalty points usable in the loyalty points function have been awarded to the user. When the suggestion system 1 determines that time-limited loyalty points have been awarded to the user, the suggestion system 1 suggests the function screen of the loyalty points function in the settlement app. As a result, the user can notice the time-limited loyalty points more easily, and hence the suggestion system 1 makes it easier to prevent time-limited loyalty points from expiring without the user noticing the existence of the time-limited loyalty points.

### [6-15. Other Modification Examples]

For example, the modification examples described above may be combined with one another.

For example, the functions described as being implemented by the settlement server 10 may be implemented by the user terminal 20 or another computer. The function described as being implemented by the settlement server 10 may be implemented by a plurality of computers in a distributed manner. For example, when a server computer of the loyalty points service exists in addition to the settlement server 10, the functions described as being implemented by the settlement server 10 may be implemented by the server computer of the loyalty points service. Each function may be implemented by the settlement server 10 and the server computer of the loyalty points service in a distributed manner.

### [7. Supplementary Notes]

For example, the suggestion system 1 may have the following configurations.
(1) A suggestion system, including:
   a determination module configured to determine whether a suggestion condition relating to a suggestion of a function screen for providing, out of a plurality of functions of a settlement app stored in a user terminal, a function to be suggested is satisfied; and
   a suggestion module configured to suggest the function screen in the settlement app when it is determined that the suggestion condition is satisfied.
(2) The suggestion system according to Item (1),
   wherein the function screen is a status function screen for providing, out of the plurality of functions, a function that is usable by a user when the settlement app is in a predetermined status,
   wherein the determination module is configured to determine whether the suggestion condition is satisfied by determining whether the settlement app is in the predetermined status, and
   wherein the suggestion module is configured to suggest the status function screen in the settlement app when it is determined that the settlement app is in the predetermined status.
(3) The suggestion system according to Item (2),
   wherein the status function screen is a communication status function screen for providing, out of the plurality of functions, a function that is usable by the user when the communication status of the settlement app is a predetermined communication status,
   wherein the determination module is configured to determine whether the settlement app is in the predetermined status by determining whether the communication status of the settlement app is the predetermined communication status, and
   wherein the suggestion module is configured to suggest the communication status function screen in the settlement app when it is determined that the communication status of the settlement app is the predetermined communication status.
(4) The suggestion system according to Item (3),
   wherein the communication status function screen is an offline function screen for providing, out of the plurality of functions, a function that is usable by the user when a communication status of the settlement app is offline,
   wherein the determination module is configured to determine whether the communication status of the settlement app is in the predetermined communication status by determining whether the communication status of the settlement app is offline, and
   wherein the suggestion module is configured to suggest the offline function screen in the settlement app when it is determined that the communication status of the settlement app is offline.
(5) The suggestion system according to any one of Items (2) to (4),
   wherein the status function screen is a start source function screen for providing a function that is usable by the user when the settlement app is started by a predetermined start source,
   wherein the determination module is configured to determine whether the settlement app is in the predetermined status by determining whether the settlement app has been started by the predetermined start source, and
   wherein the suggestion module is configured to suggest the start source function screen in the settlement app when it is determined that the settlement app has been started by the predetermined start source.
(6) The suggestion system according to any one of Items (1) to (5),
   wherein the function screen is a settlement-related function screen for providing, out of the plurality of functions, a settlement-related function relating to settlements executed from the settlement app,
   wherein the suggestion system further includes a history information acquisition module configured to acquire history information relating to a history of the settlements executed by the settlement-related function,
   wherein the determination module is configured to determine whether the suggestion condition is satisfied based on the history information, and
   wherein the suggestion module is configured to suggest the settlement-related function screen in the settlement app when it is determined that the suggestion condition is satisfied.
(7) The suggestion system according to Item (6),
   wherein the history information indicates an execution status of the settlements in a predetermined time period,
   wherein the determination module is configured to determine whether the suggestion condition is satisfied by determining whether the execution status of the settlements indicated by the history information is a predetermined status, and
   wherein the suggestion module is configured to suggest the settlement-related function screen in the settlement app when it is determined that the execution status of the settlements indicated by the history information is the predetermined status.
(8) The suggestion system according to Item (6) or (7), further including:
   a position information acquisition module configured to acquire position information relating to a position of the user; and
   a facility estimation module configured to estimate a facility in which the user is present based on the position information,
   wherein the history information indicates the settlement-related function used by the user in a past,
   wherein the determination module is configured to determine whether the suggestion condition is satisfied by determining, based on the history information, whether a settlement-related function used in the facility by the user in the past exists, and
   wherein the suggestion module is configured to suggest, when it is determined that a settlement-related function used in the facility by the user in the past exists, the settlement-related function screen of the settlement-related function in the settlement app.
(9) The suggestion system according to any one of Items (6) to (8),
   wherein the history information indicates the settlement-related function used by the user in a past,
   wherein the determination module is configured to determine whether the suggestion condition is satisfied by determining, based on the history information, whether a settlement-related function that is relatively unused by the user exists, and
   wherein the suggestion module is configured to suggest, when it is determined that a settlement-related function that is relatively unused by the user exists, the settlement-related function screen of the settlement-related function in the settlement app.
(10) The suggestion system according to any one of Items (1) to (9),
   wherein the function screen is a settlement-related function screen for providing, out of the plurality of functions, a settlement-related function relating to a settlement executed from the settlement app,
   wherein the suggestion system further includes a use information acquisition module configured to acquire use information relating to a use of the settlement-related function when the settlement-related function is used,
   wherein the determination module is configured to determine whether the suggestion condition is satisfied based on the use information, and
   wherein the suggestion module is configured to suggest the settlement-related function screen in the settlement app when it is determined that the suggestion condition is satisfied.
(11) The suggestion system according to Item (10),
   wherein the plurality of functions include, as the settlement-related function, a loyalty points function in which loyalty points are used and a settlement function in which settlement means different from the loyalty points is used,
   wherein the use information acquisition module is configured to acquire, when one of the loyalty points function and the settlement function is used, the use information with which the one of the loyalty points function and the settlement function is identifiable,
   wherein the determination module is configured to determine, based on the use information, whether the suggestion condition of another of the loyalty points function and the settlement function is satisfied, and
   wherein the suggestion module is configured to suggest the settlement-related function screen of the another of the loyalty points function and the settlement function in the settlement app when it is determined that the suggestion condition of the another of the loyalty points function and the settlement function is satisfied.
(12) The suggestion system according to Item (11), further including:
   a position information acquisition module configured to acquire position information relating to a position of the user; and
   a facility estimation module configured to estimate a facility in which the user is present based on the position information,
   wherein the determination module is configured to determine whether the suggestion condition of the another of the loyalty points function and the settlement function is satisfied by determining whether the another of the loyalty points function and the settlement function is usable at the facility, and
   wherein the suggestion module is configured to suggest the settlement-related function screen of the another of the loyalty points function and the settlement function in the settlement app when it is determined that the another of the loyalty points function and the settlement function is usable at the facility.
(13) The suggestion system according to any one of Items (1) to (12),
   wherein the plurality of functions include a settlement function which uses a balance and a money addition function of adding money to the balance,
   wherein the determination module is configured to determine whether the suggestion condition is satisfied by determining whether the balance is less than a threshold value, and
   wherein the suggestion module is configured to suggest the function screen of the money addition function in the settlement app when it is determined that the balance is less than the threshold value.
(14) The suggestion system according to any one of Items (1) to (13), further including:
   a position information acquisition module configured to acquire position information relating to a position of the user; and
   a facility estimation module configured to estimate a facility in which the user is present based on the position information,
   wherein the determination module is configured to determine whether the suggestion condition is satisfied by determining whether the function to be suggested is usable at the facility, and
   wherein the suggestion module is configured to suggest the settlement-related function screen in the settlement app when it is determined that the function to be suggested is usable at the facility.
(15) The suggestion system according to any one of Items (1) to (14), further including an operation information acquisition module configured to acquire operation information relating to an operation by the user in the settlement app,
   wherein the determination module is configured to determine whether the suggestion condition is satisfied based on the operation information.
(16) The suggestion system according to Item (15),
   wherein the determination module is configured to determine whether the suggestion condition is satisfied by determining, based on the operation information, whether a function used relatively more frequently or relatively less frequently by the user exists, and
   wherein the suggestion module is configured to suggest, when it is determined that a function used relatively more frequently or relatively less frequently by the user exists, the function screen of the function in the settlement app.
(17) The suggestion system according to Item (15),
   wherein the operation information acquisition module is configured to acquire the operation information relating to the operation by the user immediately before the settlement app is ended, and
   wherein the determination module is configured to determine whether the suggestion condition is satisfied based on the operation by the user immediately before the settlement app is ended which is indicated by the operation information.
(18) The suggestion system according to any one of Items (1) to (17),
   wherein the plurality of functions includes a loyalty points function in which loyalty points are used,
   wherein the determination module is configured to determine whether the suggestion condition is satisfied by determining whether time-limited loyalty points usable in the loyalty points function have been awarded to the user, and
   wherein the suggestion module is configured to suggest the function screen of the loyalty points function in the settlement app when it is determined that the time-limited loyalty points have been awarded to the user.

## Claims

1. A suggestion system (1), comprising:
a determination module (102, 201) configured to determine whether a suggestion condition relating to a suggestion of a function screen for providing, out of a plurality of functions of a settlement app stored in a user terminal (20), a function to be suggested is satisfied; and
a suggestion module (103, 202) configured to suggest the function screen in the settlement app when it is determined that the suggestion condition is satisfied.

2. The suggestion system (1) according to claim 1,
wherein the function screen is a status function screen for providing, out of the plurality of functions, a function that is usable by a user when the settlement app is in a predetermined status,
wherein the determination module (102, 201) is configured to determine whether the suggestion condition is satisfied by determining whether the settlement app is in the predetermined status, and
wherein the suggestion module (103, 202) is configured to suggest the status function screen in the settlement app when it is determined that the settlement app is in the predetermined status.

3. The suggestion system (1) according to claim 2,
wherein the status function screen is a communication status function screen for providing, out of the plurality of functions, a function that is usable by the user when a communication status of the settlement app is a predetermined communication status,
wherein the determination module (102, 201) is configured to determine whether the settlement app is in the predetermined status by determining whether the communication status of the settlement app is the predetermined communication status, and
wherein the suggestion module (103, 202) is configured to suggest the communication status function screen in the settlement app when it is determined that the communication status of the settlement app is the predetermined communication status.

4. The suggestion system (1) according to claim 3,
wherein the communication status function screen is an offline function screen for providing, out of the plurality of functions, a function that is usable by the user when the communication status of the settlement app is offline,
wherein the determination module (102, 201) is configured to determine whether the communication status of the settlement app is in the predetermined communication status by determining whether the communication status of the settlement app is offline, and
wherein the suggestion module (103, 202) is configured to suggest the offline function screen in the settlement app when it is determined that the communication status of the settlement app is offline.

5. The suggestion system (1) according to any one of claims 2 to 4,
wherein the status function screen is a start source function screen for providing a function that is usable by the user when the settlement app is started by a predetermined start source,
wherein the determination module (102, 201) is configured to determine whether the settlement app is in the predetermined status by determining whether the settlement app has been started by the predetermined start source, and
wherein the suggestion module (103, 202) is configured to suggest the start source function screen in the settlement app when it is determined that the settlement app has been started by the predetermined start source.

6. The suggestion system (1) according to any one of claims 1 to 5,
wherein the function screen is a settlement-related function screen for providing, out of the plurality of functions, a settlement-related function relating to settlements executed from the settlement app,
wherein the suggestion system (1) further comprises a history information acquisition module (104) configured to acquire history information relating to a history of the settlements executed by the settlement-related function,
wherein the determination module (102, 201) is configured to determine whether the suggestion condition is satisfied based on the history information, and
wherein the suggestion module (103, 202) is configured to suggest the settlement-related function screen in the settlement app when it is determined that the suggestion condition is satisfied.

7. The suggestion system (1) according to claim 6,
wherein the history information indicates an execution status of the settlements in a predetermined time period,
wherein the determination module (102, 201) is configured to determine whether the suggestion condition is satisfied by determining whether the execution status of the settlements indicated by the history information is a predetermined status, and
wherein the suggestion module (103, 202) is configured to suggest the settlement-related function screen in the settlement app when it is determined that the execution status of the settlements indicated by the history information is the predetermined status.

8. The suggestion system (1) according to claim 6 or 7, further comprising:
a position information acquisition module (105) configured to acquire position information relating to a position of the user; and
a facility estimation module (106) configured to estimate a facility in which the user is present based on the position information,
wherein the history information indicates the settlement-related function used by the user in a past,
wherein the determination module (102, 201) is configured to determine whether the suggestion condition is satisfied by determining, based on the history information, whether a settlement-related function used in the facility by the user in the past exists, and
wherein the suggestion module (103, 202) is configured to suggest, when it is determined that a settlement-related function used in the facility by the user in the past exists, the settlement-related function screen of the settlement-related function in the settlement app.

9. The suggestion system (1) according to any one of claims 6 to 8,
wherein the history information indicates the settlement-related function used by the user in a past,
wherein the determination module (102, 201) is configured to determine whether the suggestion condition is satisfied by determining, based on the history information, whether a settlement-related function that is relatively unused by the user exists, and
wherein the suggestion module (103, 202) is configured to suggest, when it is determined that a settlement-related function that is relatively unused by the user exists, the settlement-related function screen of the settlement-related function in the settlement app.

10. The suggestion system (1) according to any one of claims 1 to 9,
wherein the function screen is a settlement-related function screen for providing, out of the plurality of functions, a settlement-related function relating to a settlement executed from the settlement app,
wherein the suggestion system (1) further comprises a use information acquisition module (107) configured to acquire use information relating to a use of the settlement-related function when the settlement-related function is used,
wherein the determination module (102, 201) is configured to determine whether the suggestion condition is satisfied based on the use information, and
wherein the suggestion module (103, 202) is configured to suggest the settlement-related function screen in the settlement app when it is determined that the suggestion condition is satisfied.

11. The suggestion system (1) according to claim 10,
wherein the plurality of functions include, as the settlement-related function, a loyalty points function in which loyalty points are used and a settlement function in which settlement means different from the loyalty points is used,
wherein the use information acquisition module (107) is configured to acquire, when one of the loyalty points function and the settlement function is used, the use information with which the one of the loyalty points function and the settlement function is identifiable,
wherein the determination module (102, 201) is configured to determine, based on the use information, whether the suggestion condition of another of the loyalty points function and the settlement function is satisfied, and
wherein the suggestion module (103, 202) is configured to suggest the settlement-related function screen of the another of the loyalty points function and the settlement function in the settlement app when it is determined that the suggestion condition of the another of the loyalty points function and the settlement function is satisfied.

12. The suggestion system (1) according to claim 11, further comprising:
a position information acquisition module (105) configured to acquire position information relating to a position of the user; and
a facility estimation module (106) configured to estimate a facility in which the user is present based on the position information,
wherein the determination module (102, 201) is configured to determine whether the suggestion condition of the another of the loyalty points function and the settlement function is satisfied by determining whether the another of the loyalty points function and the settlement function is usable at the facility, and
wherein the suggestion module (103, 202) is configured to suggest the settlement-related function screen of the another of the loyalty points function and the settlement function in the settlement app when it is determined that the another of the loyalty points function and the settlement function is usable at the facility.

13. The suggestion system (1) according to any one of claims 1 to 12,
wherein the plurality of functions include a settlement function which uses a balance and a money addition function of adding money to the balance,
wherein the determination module (102, 201) is configured to determine whether the suggestion condition is satisfied by determining whether the balance is less than a threshold value, and
wherein the suggestion module (103, 202) is configured to suggest the function screen of the money addition function in the settlement app when it is determined that the balance is less than the threshold value.

14. A suggestion method, comprising:
determining whether a suggestion condition relating to a suggestion of a function screen for providing, out of a plurality of functions of a settlement app stored in a user terminal (20), a function to be suggested is satisfied; and
suggesting the function screen in the settlement app when it is determined that the suggestion condition is satisfied.

15. A program for causing a computer to function as:
a determination module (102, 201) configured to determine whether a suggestion condition relating to a suggestion of a function screen for providing, out of a plurality of functions of a settlement app stored in a user terminal (20), a function to be suggested is satisfied; and
a suggestion module (103, 202) configured to suggest the function screen in the settlement app when it is determined that the suggestion condition is satisfied.
